# EUROPEAN PATENT APPLICATION

(11) **EP 4 664 378 A1**
(43) Date of publication of application: **17.12.2025**
(21) Application number: 24841671.1
(22) Date of filing: 02.09.2024
(51) Int. Cl.: G06Q 30/0251, G06Q 30/0241, H04N 21/458

(54) **SYSTEM, PROGRAM, AND METHOD**

(30) Priority: 24.04.2024 JP 2024070205; 12.08.2024 JP 2024134729
(71) Applicant: Stamp Inc., Minato-ku Tokyo 106-6116 (JP)
(72) Inventor: NAKAMICHI, Yoshiaki, Tokyo 106-6116 (JP)
(74) Representative: Hoffmann Eitle
(86) International application number: PCT/JP2024/031520
(87) International publication number: WO 2025/225046

(57) **Abstract**

The present invention provides a novel system that outputs an advertisement.

A system comprising: a first server apparatus; and a user terminal capable of establishing communication connection with the first server apparatus, the system comprising an advertisement outputter configured to output an advertisement on a part of a window of one active application displayed on the user terminal or on a part of a home screen displayed on the user terminal.

## Description

### Technical Field

The present invention relates to a system, a program and a method that outputs an advertisement.

### Background Art

Nowadays, there are many apps and services that allow free viewing of comics and videos (Non Patent Literature 1 and Non Patent Literature 2).

There is a conventional advertisement display status monitoring program insisted to be able to monitor an advertisement display status more accurately (refer to Patent Literature 1).

### Citation List

### Patent Literature

Patent Literature 1: JP 2020-109706 A

### Non Patent Literature

Non Patent Literature 1: Youtube (registered trademark), [retrieved on April 20, 2024], Internet [URL:https://www.youtube.com/]
Non Patent Literature 2: Welcome to Piccoma, [retrieved on April 20, 2024], Internet
   [URL:https://piccoma.com/ad/Official_001/?utm_source=yahoo&utm_medium=c pc&utm_campaign=KP_YSS&utm_content=Bigword&argument=hBQRfkqQ&d mai=a6489944b4e23a&yclid=YSS.1001255328.EAlalQobChMIgLbw_obQhQM VywZ7Bx3iIgrQEAAYASAAEgIEovD_BwE]

### Summary of Invention

### Technical Problem

The present invention provides a novel system that outputs an advertisement.

### Solution to Problem

The problem can be solved, for example, by the following:
[1] A system comprising: a first server apparatus; and a user terminal capable of establishing communication connection with the first server apparatus, the system comprising an advertisement outputter configured to output an advertisement on a part of a window of one active application displayed on the user terminal or on a part of a home screen displayed on the user terminal;
[2] The system according to [1], wherein predetermined information processing is executable in the first server apparatus, the user terminal, or a second server apparatus different from the first server apparatus in response to transmission of the advertisement from the first server apparatus to the user terminal or in response to the output of the advertisement by the advertisement outputter;
[3] The system according to [2], wherein predetermined information processing is executable in further response to a predetermined operation related to a second advertisement related to the advertisement performed in the user terminal;
[4] The system according to any one of [1] to [3], comprising an information storage configured to store or update predetermined information in response to transmission of the advertisement from the first server apparatus to the user terminal or in response to the output of the advertisement by the advertisement outputter;
[5] The system according to any one of [1] to [4], wherein the information storage stores or updates predetermined information in further response to a predetermined operation related to a second advertisement related to the advertisement performed in the user terminal;
[6] The system according to [4] or [5], wherein predetermined information processing is enabled in the first server apparatus, the user terminal, or the second server apparatus in a case where the predetermined information satisfies a predetermined condition;
[7] The system according to any one of [4] to [6], wherein the predetermined information is a point given to a user who operates the user terminal;
[8] The system according to any one of [4] to [6], wherein the predetermined information is a flag indicating whether or not to enable predetermined information processing in the first server apparatus, the user terminal, or the second server apparatus;
[9] The system according to any one of [2] to [8], wherein the predetermined information processing is a process of transmitting content stored in the first server apparatus or the second server apparatus from the first server apparatus or the second server apparatus to the user terminal, or a process of outputting the content in the user terminal;
[10] The system according to any one of [2] to [8], wherein the predetermined information processing is, in the first server apparatus or the second server apparatus, a process of granting privilege data to a user who operates the user terminal, a process of registering granting of a privilege to the user, or a process of notifying the user terminal of granting a privilege;
[11] The system according to any one of [1] to [10], wherein the advertisement outputter outputs a different advertisement according to the application, outputs a different advertisement according to display content on the window of the application, or outputs a different advertisement according to display content of the home screen;
[12] The system according to any one of [1] to [11], wherein on a basis of control information for determining an application on which an advertisement is not output, the advertisement outputter does not output the advertisement on a part of a window of the application on which an advertisement is not output;
[13] The system according to any one of [1] to [12], wherein on a basis of control information for determining an application on which an advertisement is output, the advertisement outputter outputs the advertisement on a part of a window of the application on which an advertisement is output;
[14] A program causing a user terminal capable of establishing communication connection with a first server apparatus to function as an advertisement outputter configured to output an advertisement on a part of a window of one active application displayed on the user terminal or on a part of a home screen displayed on the user terminal;
[15] A method executed in a system including a first server apparatus, and a user terminal capable of establishing communication connection with the first server apparatus, the method comprising an advertisement output step of outputting an advertisement on a part of a window of one active application displayed on the user terminal or on a part of a home screen displayed on the user terminal;
[16] A system comprising: a first server apparatus; a second server apparatus; and a user terminal capable of establishing communication connection with the first server apparatus and the second server apparatus, the system comprising: an advertisement transmitter configured to transmit an advertisement from the first server apparatus to the user terminal; an advertisement outputter configured to output the advertisement transmitted from the first server apparatus on a part of a window of one active application displayed on the user terminal or on a part of a home screen displayed on the user terminal; and a first process executer configured to execute predetermined information processing in the second server apparatus in response to the transmission of the advertisement by the advertisement transmitter or in response to the output of the advertisement by the advertisement outputter; a second process executer configured to execute predetermined information processing in the second server apparatus in response to the transmission of the advertisement by the advertisement transmitter and a predetermined operation performed in the user terminal or in response to the output of the advertisement by the advertisement outputter and a predetermined operation performed in the user terminal; and/or a third process executer configured to execute predetermined information processing in the second server apparatus by consuming a point given in response to the transmission of the advertisement from the first server apparatus to the user terminal or by consuming a point given in response to the output of the advertisement received from the first server apparatus in the user terminal;
[17] A system comprising: a first server apparatus; and a user terminal capable of establishing communication connection with the first server apparatus, the system comprising: an advertisement transmitter configured to transmit an advertisement from the first server apparatus to the user terminal; an advertisement outputter configured to output the advertisement transmitted from the first server apparatus on a part of a window of one active application displayed on the user terminal or on a part of a home screen displayed on the user terminal; and a first process executer configured to execute predetermined information processing in the first server apparatus in response to the transmission of the advertisement by the advertisement transmitter or in response to the output of the advertisement by the advertisement outputter; a second process executer configured to execute predetermined information processing in the first server apparatus in response to the transmission of the advertisement by the advertisement transmitter and a predetermined operation performed in the user terminal or in response to the output of the advertisement by the advertisement outputter and a predetermined operation performed in the user terminal; and/or a third process executer configured to execute predetermined information processing in the first server apparatus by consuming a point given in response to the transmission of the advertisement from the first server apparatus to the user terminal or by consuming a point given in response to the output of the advertisement received from the first server apparatus in the user terminal;
[18] The system according to [16] or [17], wherein the predetermined information processing is a process of transmitting content stored in the first server apparatus or the second server apparatus from the first server apparatus or the second server apparatus to the user terminal, or a process of outputting the content in the user terminal;
[19] The system according to [16] or [17], wherein the predetermined information processing is, in the first server apparatus or the second server apparatus, a process of granting privilege data to a user who operates the user terminal, a process of registering granting of a privilege to the user, or a process of notifying the user terminal of granting a privilege;
[20] The system according to any one of [16] to [19], wherein the point is given to a user in response to the transmission of the advertisement from the first server apparatus to the user terminal and a predetermined operation related to a second advertisement related to the advertisement performed in the user terminal, or the point is given to the user in response to the output of the advertisement received from the first server apparatus in the user terminal and a predetermined operation related to a second advertisement related to the advertisement performed in the user terminal;
[21] A method executed in a system including a first server apparatus, a second server apparatus, and a user terminal capable of establishing communication connection with the first server apparatus and the second server apparatus, the method comprising: an advertisement transmission step of transmitting an advertisement from the first server apparatus to the user terminal; an advertisement output step of outputting the advertisement transmitted from the first server apparatus on a part of a window of one active application displayed on the user terminal or on a part of a home screen displayed on the user terminal; and a first process execution step of executing predetermined information processing in the second server apparatus in response to the transmission of the advertisement in the advertisement transmission step or in response to the output of the advertisement in the advertisement output step; a second process execution step of executing predetermined information processing in the second server apparatus in response to the transmission of the advertisement in the advertisement transmission step and a predetermined operation performed in the user terminal or in response to the output of the advertisement in the advertisement output step and a predetermined operation performed in the user terminal; and/or a third process execution step of executing predetermined information processing in the second server apparatus by consuming a point given in response to the transmission of the advertisement from the first server apparatus to the user terminal or by consuming a point given in response to the output of the advertisement received from the first server apparatus in the user terminal;
[22] A method executed in a system including a first server apparatus and a user terminal capable of establishing communication connection with the first server apparatus, the method comprising: an advertisement transmission step of transmitting an advertisement from the first server apparatus to the user terminal; an advertisement output step of outputting the advertisement transmitted from the first server apparatus on a part of a window of one active application displayed on the user terminal or on a part of a home screen displayed on the user terminal; and a first process execution step of executing predetermined information processing in the first server apparatus in response to the transmission of the advertisement in the advertisement transmission step or in response to the output of the advertisement in the advertisement output step; a second process execution step of executing predetermined information processing in the first server apparatus in response to the transmission of the advertisement in the advertisement transmission step and a predetermined operation performed in the user terminal or in response to the output of the advertisement in the advertisement output step and a predetermined operation performed in the user terminal; and/or a third process execution step of executing predetermined information processing in the first server apparatus by consuming a point given in response to the transmission of the advertisement from the first server apparatus to the user terminal or by consuming a point given in response to the output of the advertisement received from the first server apparatus in the user terminal.

The problem can also be solved, for example, by the following:
[31] A program causing a computer to function as: an advertisement acquisition unit configured to acquire an advertisement from an advertisement management unit that stores one or more advertisements; an advertisement output unit configured to output the advertisement acquired by the advertisement acquisition unit; a status changing unit configured to change status information related to an advertisement output status of a status management unit that manages the status information; an instruction acceptance unit configured to accept a content output instruction; a determination unit configured to refer to the status management unit and determine whether or not the status management unit satisfies a content output condition that is a condition for outputting content corresponding to the content output instruction; a content acquisition unit configured to acquire the content specified by the content output instruction from a content storage unit that stores two or more pieces of content in a case where the determination unit determines that the content output condition is satisfied; and a content output unit configured to output the content acquired by the content acquisition unit only in the case where the determination unit determines that the content output condition is satisfied;
[32] The program according to [31], causing the computer to function such that the content output unit does not output second content in a case where the advertisement output unit does not output the advertisement after output of first content;
[33] The program according to [31] or [32], causing the computer to function such that the advertisement output unit does not output the advertisement while the content output unit is outputting the content;
[34] The program according to any one of [31] to [33], causing the computer to function such that the advertisement output unit outputs the advertisement after the content output unit completes the output of the content;
[35] The program according to [34], causing the computer to function such that the advertisement output unit outputs the advertisement on a window of a running application or on a home screen after the content output unit completes the output of the content;
[36] The program according to [35], causing the computer to function such that the advertisement management unit stores two or more advertisements, and the advertisement acquisition unit acquires a different advertisement from the advertisement management unit according to the application or the home screen on which the advertisement is output;
[37] The program according to [35] or [36], causing the computer to function such that the advertisement output unit refers to a control information management unit that stores control information that is information for determining an application on which an advertisement is not output or information for determining an application on which an advertisement is output, and does not output the advertisement on a window of the application on which an advertisement is not output on the basis of the control information;
[38] The program according to any one of [35] to [37], causing the computer to function such that the advertisement output unit outputs the advertisement by PinP on the window of the application or on the home screen;
[39] The program according to any one of [31] to [38], causing the computer to function such that the status management unit manages status information for each of two or more user identifiers, and
   the determination unit determines whether or not the content output condition is satisfied on the basis of status information paired with a user identifier corresponding to the content output instruction in a case where the instruction acceptance unit receives the content output instruction;
[40] A program causing a computer to function as: an instruction acceptance unit configured to accept a content output instruction; a determination unit configured to refer to a status management unit that manages status information related to an advertisement output status and determine whether or not the status management unit satisfies a content output condition for outputting content corresponding to the content output instruction; a content acquisition unit configured to acquire the content specified by the content output instruction from a content storage unit that stores two or more pieces of content in a case where the determination unit determines that the content output condition is satisfied; and a content output unit configured to output the content acquired by the content acquisition unit only in the case where the determination unit determines that the content output condition is satisfied;
[41] A program causing a computer to function as: an advertisement acquisition unit configured to acquire an advertisement from an advertisement management unit that stores one or more advertisements; an advertisement output unit configured to output the advertisement acquired by the advertisement acquisition unit; a status changing unit configured to change status information of a status management unit that manages status information related to an advertisement output status in the advertisement output unit; and a completion acceptance unit configured to accept that content output is completed, wherein the advertisement output unit outputs the advertisement in a case where the completion acceptance unit accepts that the output is completed;
[42] A content output apparatus including: an advertisement acquisition unit configured to acquire an advertisement from an advertisement management unit that stores one or more advertisements; an advertisement output unit configured to output the advertisement acquired by the advertisement acquisition unit; a status changing unit configured to change status information related to an advertisement output status of a status management unit that manages the status information; an instruction acceptance unit configured to accept a content output instruction; a determination unit configured to refer to the status management unit and determine whether or not the status management unit satisfies a content output condition that is a condition for outputting content corresponding to the content output instruction; a content acquisition unit configured to acquire the content specified by the content output instruction from a content storage unit that stores two or more pieces of content in a case where the determination unit determines that the content output condition is satisfied; and a content output unit configured to output the content acquired by the content acquisition unit only in the case where the determination unit determines that the content output condition is satisfied;
[43] A content output method achieved by an advertisement acquisition unit, an advertisement output unit, a status changing unit, an instruction acceptance unit, a determination unit, a content acquisition unit, and a content output unit, the method including: an advertisement acquisition step of the advertisement acquisition unit acquiring an advertisement from an advertisement management unit that stores one or more advertisements; an advertisement output step of the advertisement output unit outputting the advertisement acquired by the advertisement acquisition unit; a status changing step of the status changing unit changing status information related to an advertisement output status of a status management unit that manages the status information; an instruction acceptance step of the instruction acceptance unit accepting a content output instruction; a determination step of the determination unit referring to the status management unit and determining whether or not the status management unit satisfies a content output condition that is a condition for outputting content corresponding to the content output instruction; a content acquisition step of the content acquisition unit acquiring the content specified by the content output instruction from a content storage unit that stores two or more pieces of content in a case where the determination unit determines that the content output condition is satisfied; and a content output step of the content output unit outputting the content acquired by the content acquisition unit only in the case where the determination unit determines that the content output condition is satisfied.

### Advantageous Effects of Invention

The present invention can provide a novel system that outputs an advertisement.

### Brief Description of Drawings

Fig. 1 is a block diagram of a content output apparatus 1 according to a first embodiment.
Fig. 2 is a flowchart for explaining an operation example of the content output apparatus 1 of the same embodiment.
Fig. 3 is a flowchart for explaining an example of first determination of the same embodiment.
Fig. 4 is a flowchart for explaining an example of advertisement output processing of the same embodiment.
Fig. 5 is a flowchart for explaining an example of second determination processing of the same embodiment.
Fig. 6 is a diagram illustrating an example of a content management table of the same embodiment.
Fig. 7 is a diagram illustrating an example of an advertisement management table of the same embodiment.
Fig. 8 is a drawing for explaining processing of the content output apparatus 1 of the same embodiment.
Fig. 9 is a drawing illustrating an output example of the same embodiment.
Fig. 10 is a drawing illustrating an output example of the same embodiment.
Fig. 11 is a drawing illustrating an output example of the same embodiment.
Fig. 12 is a conceptual drawing of an information system A according to a second embodiment.
Fig. 13 is a block diagram of the information system A of the same embodiment.
Fig. 14 is a flowchart for explaining an operation example of a content output apparatus 2 of the same embodiment.
Fig. 15 is a flowchart for explaining an operation example of a terminal apparatus 3 of the same embodiment.
Fig. 16 is a diagram illustrating an example of a user management table of the same embodiment.
Fig. 17 is a block diagram of a computer system according to the above embodiments.
Fig. 18 is a block diagram illustrating a configuration of a system according to a third embodiment.
Fig. 19 is a block diagram illustrating a configuration of a user terminal according to the third embodiment.
Fig. 20 is a block diagram illustrating a configuration of a first server apparatus according to the third embodiment.
Fig. 21 is a block diagram illustrating a configuration of a second server apparatus according to the third embodiment.
Fig. 22 is a diagram illustrating a flowchart of advertisement display processing of the third embodiment.
Fig. 23 is a diagram illustrating a flowchart of app switching processing of the third embodiment.
Fig. 24 is a diagram illustrating a flowchart of a process of executing predetermined information processing of the third embodiment.

### Description of Embodiments

Hereinafter, embodiments of a content output apparatus and the like will be described with reference to the drawings. Note that components denoted by the same reference numerals perform similar operations in the embodiments, and therefore, repeated description may be omitted.

### (First Embodiment)

In the present embodiment, a content output apparatus that manages an advertisement output status for playing content will be described. In addition, in the present embodiment, a content output apparatus that can output content on the basis of a managed advertisement output status will be described.

In addition, in the present embodiment, a content output apparatus that does not allow viewing of another content in a case where an advertisement output status does not satisfy a content output condition after viewing of one content will be described.

In addition, in the present embodiment, a content output apparatus that does not output an advertisement in an application (hereinafter, appropriately referred to as "app") that plays content will be described.

In addition, in the present embodiment, a content output apparatus that outputs an advertisement after playing content will be described.

In addition, in the present embodiment, a content output apparatus that outputs an advertisement to another running app or a home screen after playing content will be described. In the present embodiment, for example, the content output apparatus outputs the advertisement to the other app or the home screen by PinP.

In addition, in the present embodiment, a content output apparatus that selects and outputs an advertisement according to a target (another app or a home screen) to which the advertisement is to be output will be described.

Furthermore, in the present embodiment, a content output apparatus that manages information for determining an app on which an advertisement is output or an app on which an advertisement is not output will be described.

In the present specification, information X being associated with information Y means that the information Y can be acquired from the information X or the information X can be acquired from the information Y, and the associating method is not limited. The information X and the information Y may be linked, may exist in the same buffer, the information X may be included in the information Y, or the information Y may be included in the information X.

In addition, in the present specification, selecting or determining information Z includes acquiring the information Z, acquiring a pointer to the information Z, acquiring an ID of the information Z, setting a flag on the information Z, and the like, and it is only necessary to be able to access the information Z.

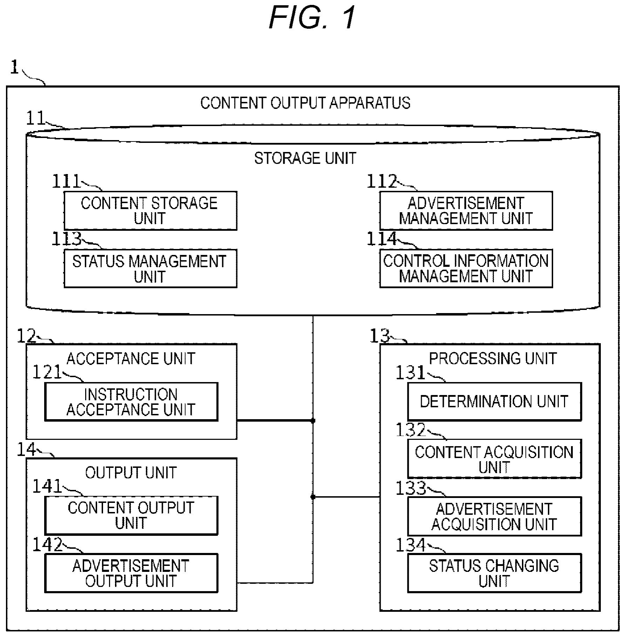

Fig. 1 is a block diagram of a content output apparatus 1 according to the present embodiment. Here, the content output apparatus 1 is a terminal. The content output apparatus 1 is, for example, a smartphone, a tablet terminal, a personal computer, or the like, but is not limited to a particular type.

The content output apparatus 1 includes a storage unit 11, an acceptance unit 12, a processing unit 13, and an output unit 14. The storage unit 11 includes a content storage unit 111, an advertisement management unit 112, a status management unit 113, and a control information management unit 114. The acceptance unit 12 includes an instruction acceptance unit 121. The processing unit 13 includes a determination unit 131, a content acquisition unit 132, an advertisement acquisition unit 133, and a status changing unit 134. The output unit 14 includes a content output unit 141 and an advertisement output unit 142.

The storage unit 11 stores various types of information. Examples of the various types of information include content, advertisements, status information, control information, one or two or more applications, and various conditions. The application is not limited to a particular type. Examples of the various conditions include a content output condition. It goes without saying that the various conditions may be embedded in a program.

The content output condition is a condition for determining whether or not to output content. The content output condition is a condition related to the status management unit 113. The condition related to the status management unit 113 is a condition related to status information. The content output condition is, for example, that status information indicating that no advertisement has been output is not present in the status management unit 113. The content output condition is, for example, that status information indicating that an advertisement has been output is present in the status management unit 113. The content output condition is, for example, that status information that is the number of negative points is not present in the status management unit 113. The content output condition is, for example, that status information that is the number of positive points is present in the status management unit 113. The content output condition is, for example, that "the number of points necessary for outputting content <= the number of positive points indicated by the status information".

An advertisement output condition is a condition for outputting an advertisement. The advertisement output condition is, for example, that the status information is information indicating that content cannot be output. The advertisement output condition is, for example, that a point that is the status information is a threshold value or less (for example, 0 or less).

The content storage unit 111 stores one or two or more pieces of content. A content identifier is usually associated with the content. For example, one or two or more content attribute values are associated with the content. For example, the number of points necessary for outputting content is associated with the content. Note that the number of points may be considered as the content attribute value.

The content is information to be output. The content is usually information viewed by a user. The content is preferably stream data. The content is, for example, video, still images, music, audio, video and audio, or the like, and is not limited to a particular data type. The content is, for example, comics, movies, books, music, or photographs.

The content identifier is information for identifying content. The content identifier is, for example, a content ID or a content name. The content attribute value is, for example, a content type, a content author, a content performer, a content size, a content playing time, and a price for outputting content.

The advertisement management unit 112 stores one or two or more advertisements. The advertisement is, for example, video, video and audio, audio, or still images. One or two or more advertisement attribute values may be associated with the advertisement. The advertisement attribute value is, for example, an app type on which the advertisement is to be output, an app identifier, and the number of points obtained by outputting the advertisement.

The status management unit 113 stores one or two or more pieces of status information. The status information may be associated with an app identifier of an app on which content is output.

The status information is information related to an advertisement output status. The information related to an advertisement output status may be information related to both of the advertisement output status and a content output status. The status information may be, for example, information related to an output status of content on which advertisement output has not been finished. Examples of the status information include information indicating that advertisement output has not been performed, information indicating that advertisement output has been performed, information indicating that content has been output, the number of points obtained by outputting an advertisement, and the number of negative points obtained by outputting content. In a case where the status information includes points, the points increase by outputting an advertisement, and the points decrease by outputting content.

For example, in a case where the status information indicating that advertisement output has not been performed is present in the status management unit 113, for example, it is not possible to output new content. For example, in a case where the status information indicating that advertisement output has been performed is present in the status management unit 113, for example, it is possible to output new content. For example, in a case where the status information indicating that content has been output is present in the status management unit 113, it is not possible to output new content. For example, in a case where the status information indicating that advertisement output has been performed is present in the status management unit 113, for example, it is possible to output new content. For example, in a case where the number of positive points obtained by outputting an advertisement is present in the status management unit 113, it is possible to output content corresponding to the number of points. For example, in a case where the number of negative points obtained by outputting content is present in the status management unit 113, it is not possible to output new content unless an advertisement is output until the number of negative points becomes 0 or positive.

The control information management unit 114 stores control information. The control information is information for determining an application on which an advertisement is not output or information for determining an application on which an advertisement is output. Note that the application on which an advertisement is output is an application on which an advertisement can be output by picture in picture (PinP) in a window of the application during running of the application. Note that the application may be a web page.

The control information includes, for example, one or more app identifiers for identifying the application on which an advertisement is not output, or one or more app identifiers for identifying the application on which an advertisement is output. The control information is, for example, a condition related to one or more attribute values (for example, an app type) of the application on which an advertisement is not output. The control information is, for example, a condition related to one or more attribute values of the application on which an advertisement is output. For example, only in a case where an app that is specified by the control information that an advertisement is output is running, an advertisement is output on a screen of the app.

Note that the content storage unit 111, the advertisement management unit 112, the status management unit 113, and the control information management unit 114 may be present in an external apparatus (not illustrated). For example, the content storage unit 111 may be present in a content server (not illustrated). For example, the advertisement management unit 112 may be present in an advertisement server (not illustrated).

The acceptance unit 12 accepts various instructions and various types of information. Examples of the various instructions and various types of information include a content output instruction, an app start instruction, and an advertisement output instruction.

The content output instruction is an instruction to output content. The content output instruction usually has a content identifier. The advertisement output instruction is an instruction to output an advertisement.

An input device for the various instructions and various types of information may be any device such as a touch panel, a keyboard, a mouse, or a menu screen.

The instruction acceptance unit 121 accepts various instructions. Examples of the various instructions include a content output instruction, an app start instruction, and an advertisement output instruction. The acceptance here is normally acceptance of information input from an input device such as a touch panel, a keyboard, or a mouse, but may be a concept including reception of information transmitted via a wired or wireless communication line, acceptance of information read from a recording medium such as an optical disk, a magnetic disk, or a semiconductor memory, and the like.

The processing unit 13 performs various types of processing. Examples of the various types of processing include processing performed by the determination unit 131, the content acquisition unit 132, the advertisement acquisition unit 133, and the status changing unit 134.

The determination unit 131 performs first determination processing as to whether or not to output content. That is, the determination unit 131 refers to the status management unit 113 and determines whether or not the status management unit 113 satisfies the content output condition. For example, the determination unit 131 determines whether or not the content output condition for outputting content corresponding to the content output instruction is satisfied. Note that whether or not the status management unit 113 satisfies the content output condition may be considered to be the same as whether or not the status information satisfies the content output condition.

The determination unit 131 performs second determination processing as to whether or not to output an advertisement. That is, the determination unit 131 refers to the status management unit 113 and determines whether or not the status management unit 113 satisfies the advertisement output condition. Note that whether or not the status management unit 113 satisfies the advertisement output condition may be considered to be the same as whether or not the status information satisfies the advertisement output condition.

The content acquisition unit 132 acquires content specified by the content output instruction from the content storage unit 111. For example, in a case where the determination unit 131 determines that the content output condition is satisfied, the content acquisition unit 132 acquires the content specified by the output instruction from the content storage unit 111 that stores two or more pieces of content.

The advertisement acquisition unit 133 acquires an advertisement from the advertisement management unit 112. It is preferable that the advertisement acquisition unit 133 acquires a different advertisement from the advertisement management unit 112 according to an application or a home screen on which the advertisement is output. For example, the advertisement acquisition unit 133 acquires an advertisement associated with the application on which the advertisement is output. For example, the advertisement acquisition unit 133 acquires an advertisement associated with the home screen. Note that a method of associating the advertisement with the application or the home screen is not limited. One or more app identifiers may be associated with the advertisement, and one or more app attribute values (for example, an app type) may be associated with the advertisement.

For example, the advertisement acquisition unit 133 acquires the advertisement from the advertisement management unit 112 immediately after content output is completed.

The status changing unit 134 changes the status information of the status management unit 113. For example, in a case where an advertisement is output, the status changing unit 134 changes the status information of the status management unit 113 so as to enable output of new content. For example, in a case where content is output, the status changing unit 134 changes the status information of the status management unit 113 so as to disable output of new content.

The output unit 14 outputs various types of information. Examples of the various types of information include content, advertisements, and a message indicating that content cannot be output.

The output here is usually displaying on a display or projection using a projector, but may be a concept including printing by a printer, sound output, transmission to an external apparatus, accumulation on a recording medium, delivery of a processing result to another processing apparatus or another program, and the like.

The content output unit 141 outputs the content acquired by the content acquisition unit 132. It is preferable that the content output unit 141 outputs the content acquired by the content acquisition unit 132 only in a case where the determination unit 131 determines that the content output condition is satisfied.

It is preferable that the content output unit 141 does not output second content in a case where the advertisement output unit 142 does not output the advertisement after output of first content.

The advertisement output unit 142 outputs the advertisement acquired by the advertisement acquisition unit 133. It is preferable that the advertisement output unit 142 does not output the advertisement while the content output unit 141 is outputting the content. This is to enable the user to comfortably view the content.

It is preferable that the advertisement output unit 142 outputs the advertisement after the content output unit 141 completes the output of the content.

It is preferable that the advertisement output unit 142 outputs the advertisement on a window of the running app or on the home screen. It is more preferable that the advertisement output unit 142 outputs the advertisement on the window of the running app or on the home screen after the content output unit 141 completes the output of the content.

In a case where it is detected that the app is the app on which an advertisement is not output on the basis of the control information of the control information management unit 114, it is preferable that the advertisement output unit 142 does not output the advertisement on the window of this app.

It is preferable that the advertisement output unit 142 outputs the advertisement by PinP on the window of the app or on the home screen.

The storage unit 11, the content storage unit 111, the advertisement management unit 112, the status management unit 113, and the control information management unit 114 are preferably nonvolatile recording media, but can also be realized by volatile recording media.

The process of storing information in the storage unit 11 and the like is not limited. For example, information may be stored in the storage unit 11 and the like via a recording medium, information transmitted via a communication line or the like may be stored in the storage unit 11 and the like, or information input via an input device may be stored in the storage unit 11 and the like.

The acceptance unit 12 and the instruction acceptance unit 121 can be realized by a device driver of an input device such as a touch panel or a keyboard, control software of a menu screen, or the like.

The processing unit 13, the determination unit 131, the content acquisition unit 132, the advertisement acquisition unit 133, and the status changing unit 134 can be usually realized by a processor, a memory, or the like. Processing procedures of the processing unit 13 and the like are usually realized by software, which is recorded in a recording medium such as a ROM. However, the processing procedures may be realized by hardware (dedicated circuit). Note that the processor is a CPU, an MPU, a GPU, or the like, and is not limited to a particular type.

The output unit 14, the content output unit 141, and the advertisement output unit 142 may be considered to include or not include an output device such as a display or a speaker. The output unit 14 and the like can be realized by driver software of an output device, or driver software of an output device and the output device, or the like.

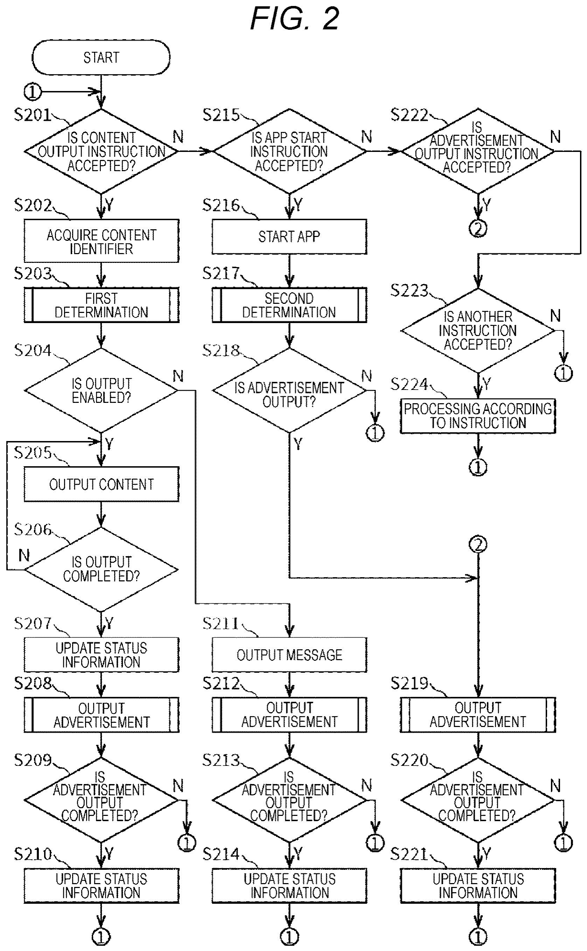

Next, an operation example of the content output apparatus 1 will be described with reference to a flowchart of Fig. 2.

(Step S201) The instruction acceptance unit 121 determines whether or not a content output instruction has been accepted from a user. In a case where the content output instruction has been accepted, the process proceeds to step S202. In a case where the content output instruction has not been accepted, the process proceeds to step S215.

(Step S202) The content acquisition unit 132 acquires a content identifier included in the content output instruction.

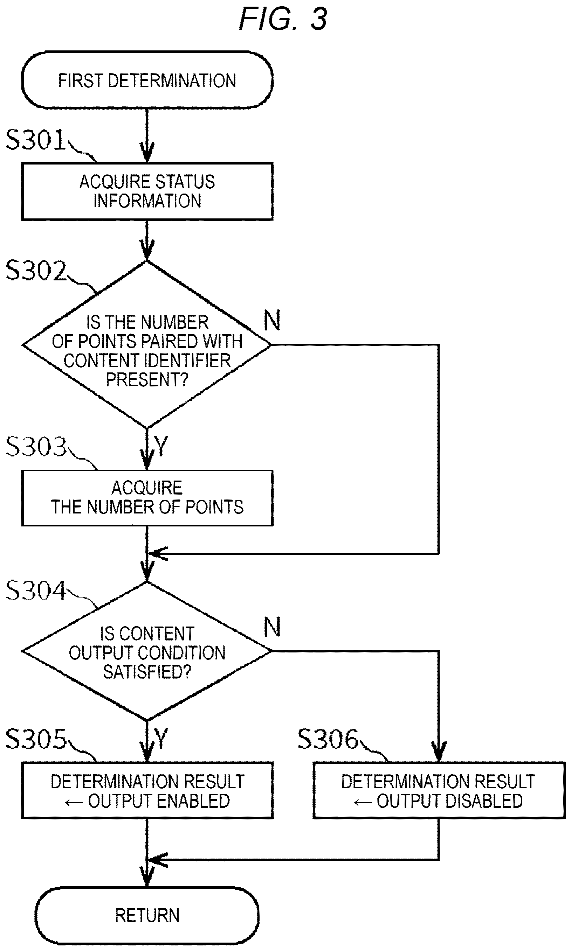

(Step S203) The determination unit 131 determines whether or not to output content. Such determination is referred to as first determination. An example of the first determination will be described with reference to a flowchart of Fig. 3.

(Step S204) When the determination result in step S203 indicates that content output is enabled, the process proceeds to step S205. When the output is disabled, the process proceeds to step S211.

(Step S205) The content acquisition unit 132 acquires content identified by the content identifier acquired in step S202 from the content storage unit 111. The content output unit 141 outputs the content acquired by the content acquisition unit 132. Note that the content acquisition unit 132 accumulates the content identifier of the output content in a buffer (not illustrated).

(Step S206) The content acquisition unit 132 determines whether or not the output of all pieces of the content identified by the content identifier acquired in step S202 is completed. In a case where the output of the content is completed, the process proceeds to step S207. In a case where the output of the content is not completed, the process returns to step S205. In a case where the content is a stream, a comic, or the like, it is determined that the output of the content is completed when the stream is played to the end or the comic is output to the last page.

(Step S207) The status changing unit 134 updates the status information of the status management unit 113 in response to the completion of the output of the content.

The status changing unit 134, for example, updates the status information to status information indicating that next content cannot be output. The status changing unit 134 deletes the status information indicating that next content can be output, for example. The status changing unit 134 accumulates the status information indicating that next content cannot be output, for example. The status changing unit 134 reduces the current number of points indicated by the status information by the number of points paired with the output content, for example.

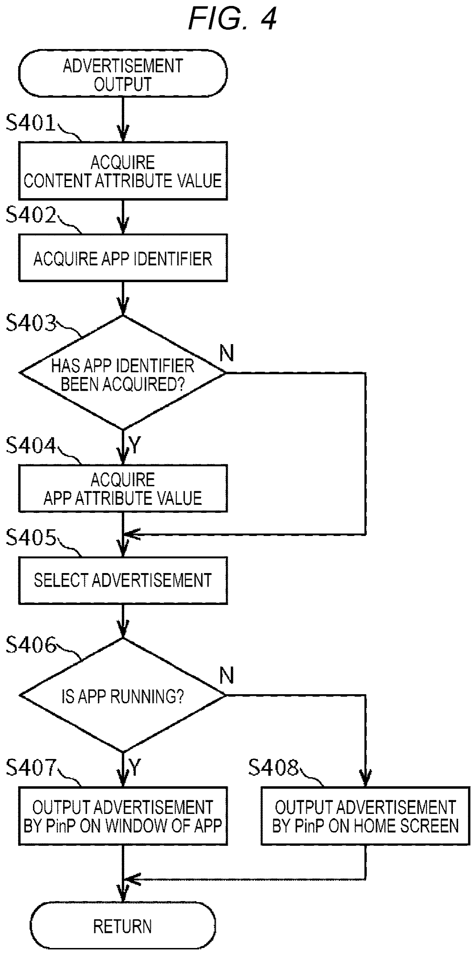

(Step S208) The advertisement acquisition unit 133 and the like perform a process for outputting an advertisement. An example of such advertisement output processing will be described with reference to a flowchart of Fig. 4.

(Step S209) The status changing unit 134 determines whether or not the output of the advertisement is completed in step S208. In a case where the output of the advertisement is completed, the process proceeds to step S210. In a case where the output of the advertisement is not completed, the process returns to step S201. Note that the case where the output of the advertisement is not completed is, for example, a case where the user forcibly terminates the output of the advertisement.

(Step S210) The status changing unit 134 updates the status information of the status management unit 113 in response to the completion of the output of the advertisement. The process returns to step S201.

The status changing unit 134, for example, updates the status information of the status management unit 113 to status information indicating that next content can be output. The status changing unit 134 deletes the status information indicating that next content cannot be output, for example. The status changing unit 134 accumulates the status information indicating that next content can be output, for example. The status changing unit 134 increases the current number of points indicated by the status information by the number of points paired with the output advertisement, for example.

(Step S211) The output unit 14 outputs a message indicating that the content instructed to be output cannot be output.

(Step S212) The advertisement acquisition unit 133 and the like perform a process for outputting an advertisement. An example of such advertisement output processing will be described with reference to the flowchart of Fig. 4.

(Step S213) The status changing unit 134 determines whether or not the output of the advertisement is completed in step S212. In a case where the output of the advertisement is completed, the process proceeds to step S214. In a case where the output of the advertisement is not completed, the process returns to step S201.

(Step S214) The status changing unit 134 updates the status information of the status management unit 113 in response to the completion of the output of the advertisement. The process returns to step S201.

The status changing unit 134, for example, updates the status information to status information indicating that next content can be output. The status changing unit 134 deletes the status information indicating that next content cannot be output, for example. The status changing unit 134 accumulates the status information indicating that next content can be output, for example. The status changing unit 134 increases the current number of points indicated by the status information by the number of points paired with the output advertisement, for example.

(Step S215) The instruction acceptance unit 121 determines whether or not an app start instruction has been accepted. In a case where the app start instruction has been accepted, the process proceeds to step S216. In a case where the app start instruction has not been accepted, the process proceeds to step S222.

(Step S216) The processing unit 13 reads out an app corresponding to the app start instruction from the storage unit 11 and starts the app.

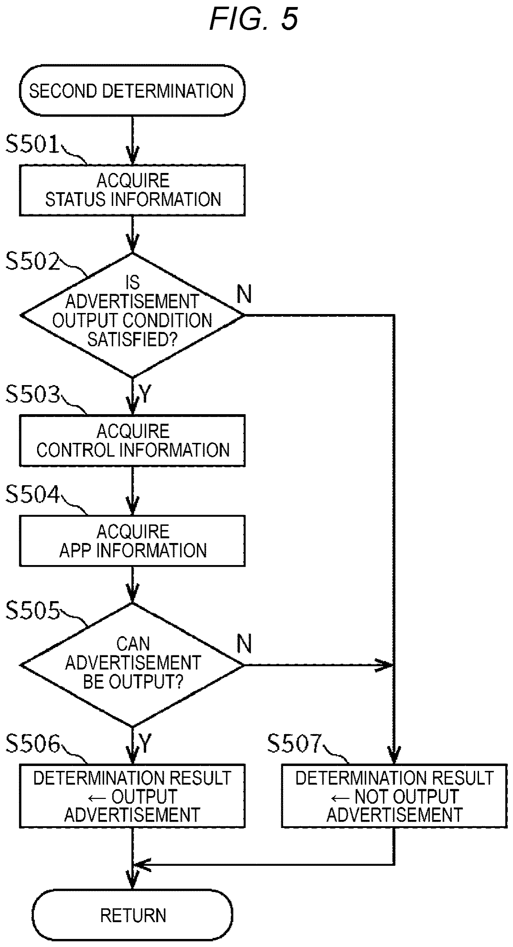

(Step S217) The determination unit 131 determines whether or not to output an advertisement. Such determination is referred to as second determination processing. An example of the second determination processing will be described with reference to a flowchart of Fig. 5.

(Step S218) When the determination result in step S217 is "output advertisement", the process proceeds to step S219. When the determination result is "not output advertisement", the process returns to step S201.

(Step S219) The advertisement acquisition unit 133 and the like perform a process for outputting an advertisement. An example of such advertisement output processing will be described with reference to a flowchart of Fig. 4.

(Step S220) The status changing unit 134 determines whether or not the output of the advertisement is completed in step S219. In a case where the output of the advertisement is completed, the process proceeds to step S221. In a case where the output of the advertisement is not completed, the process returns to step S201.

(Step S221) The status changing unit 134 updates the status information of the status management unit 113 in response to the completion of the output of the advertisement. The process returns to step S201.

The status changing unit 134, for example, updates the status information to status information indicating that next content can be output. The status changing unit 134 deletes the status information indicating that next content cannot be output, for example. The status changing unit 134 accumulates the status information indicating that next content can be output, for example. The status changing unit 134 increases the current number of points indicated by the status information by the number of points paired with the output advertisement, for example.

(Step S222) The acceptance unit 12 determines whether or not an advertisement output instruction has been accepted from the user. In a case where the advertisement output instruction has been accepted, the process proceeds to step S219. In a case where the advertisement output instruction has not been accepted, the process proceeds to step S223.

(Step S223) The acceptance unit 12 determines whether or not another instruction has been accepted. In a case where the other instruction has been accepted, the process proceeds to step S224. In a case where the other instruction has not been accepted, the process returns to step S201.

(Step S224) The processing unit 13 performs processing according to the other instruction. The process returns to step S201.

In the flowchart of Fig. 2, steps S208 to S210 may be omitted. In such a case, the process returns to step S201 from step S207.

In addition, in the flowchart of Fig. 2, steps S212 to S214 may be omitted. In such a case, the process returns to step S201 from step S211.

Furthermore, in the flowchart of Fig. 2, the process ends by power off or processing end interruption.

Next, an example of the first determination in step S203 will be described with reference to the flowchart of Fig. 3.

(Step S301) The determination unit 131 acquires the status information of the status management unit 113.

(Step S302) The determination unit 131 determines whether or not the number of points paired with the content identifier is present. In a case where the number of points is present, the process proceeds to step S303. In a case where the number of points is not present, the process proceeds to step S304.

(Step S303) The determination unit 131 acquires the number of points paired with the content identifier.

(Step S304) The determination unit 131 determines whether or not the status information, or the status information and the number of points satisfy the content output condition of the storage unit 11. In a case where the content output condition is satisfied, the process proceeds to step S305. In a case where the content output condition is not satisfied, the process proceeds to step S306.

(Step S305) The determination unit 131 assigns a value "output enabled" to a variable "determination result". The process returns to the superior process.

(Step S306) The determination unit 131 assigns a value "output disabled" to the variable "determination result". The process returns to the superior process.

Next, an example of the advertisement output processing in step S208 will be described with reference to the flowchart of Fig. 4.

(Step S401) The advertisement acquisition unit 133 acquires one or more content attribute values of the output content. Here, in a case where the content identifier of the output content is not present in the buffer (not illustrated), the advertisement acquisition unit 133 does not acquire the one or more content attribute values.

(Step S402) The advertisement acquisition unit 133 acquires an app identifier of a running app. Here, in a case where there is no running app, the advertisement acquisition unit 133 does not acquire the app identifier.

(Step S403) The advertisement acquisition unit 133 determines whether or not the app identifier is acquired in step S402. In a case where the app identifier is acquired, the process proceeds to step S404. In a case where the app identifier is not acquired, the process proceeds to step S405.

(Step S404) The advertisement acquisition unit 133 acquires one or more app attribute values paired with the acquired app identifier.

(Step S405) The advertisement acquisition unit 133 selects and acquires an advertisement from the advertisement management unit 112.

For example, the advertisement acquisition unit 133 acquires, from the advertisement management unit 112, an advertisement corresponding to one or two or more types of information among the content identifier, the one or more content attribute values, the app identifier, and the one or more app attribute values. Note that the advertisement acquisition unit 133 may randomly select an advertisement from the advertisement management unit 112.

(Step S406) The advertisement output unit 142 determines whether or not any app is running. When any app is running, the process proceeds to step S407. When no app is running, the process proceeds to step S408.

(Step S407) The advertisement output unit 142 outputs the acquired advertisement by PinP on a window of the running app. The process returns to the superior process.

(Step S408) The advertisement output unit 142 outputs the acquired advertisement by PinP on the home screen. The process returns to the superior process.

Next, an example of the second determination processing in step S217 will be described with reference to the flowchart of Fig. 5.

(Step S501) The determination unit 131 acquires the status information of the status management unit 113.

(Step S502) The determination unit 131 determines whether or not the status information acquired in step S501 satisfies the advertisement output condition. In a case where the advertisement output condition is satisfied, the process proceeds to step S503. In a case where the advertisement output condition is not satisfied, the process proceeds to step S507.

(Step S503) The determination unit 131 acquires the control information of the control information management unit 114.

(Step S504) The determination unit 131 acquires app information of the running app. The app information is an app identifier or/and one or more app attribute values.

(Step S505) The determination unit 131 determines whether or not an advertisement can be output on a window of the running app with using the control information and the app information. In a case where the advertisement can be output, the process proceeds to step S506. In a case where the advertisement cannot be output, the process proceeds to step S507.

(Step S506) The determination unit 131 assigns a value "output advertisement" to a variable "determination result". The process returns to the superior process.

(Step S507) The determination unit 131 assigns a value "not output advertisement" to the variable "determination result". The process returns to the superior process.

Hereinafter, a specific operation example of the content output apparatus 1 in the present embodiment will be described. The content here is assumed to be, for example, comic content. In addition, it is assumed that the content output apparatus 1 is a smartphone used by a user.

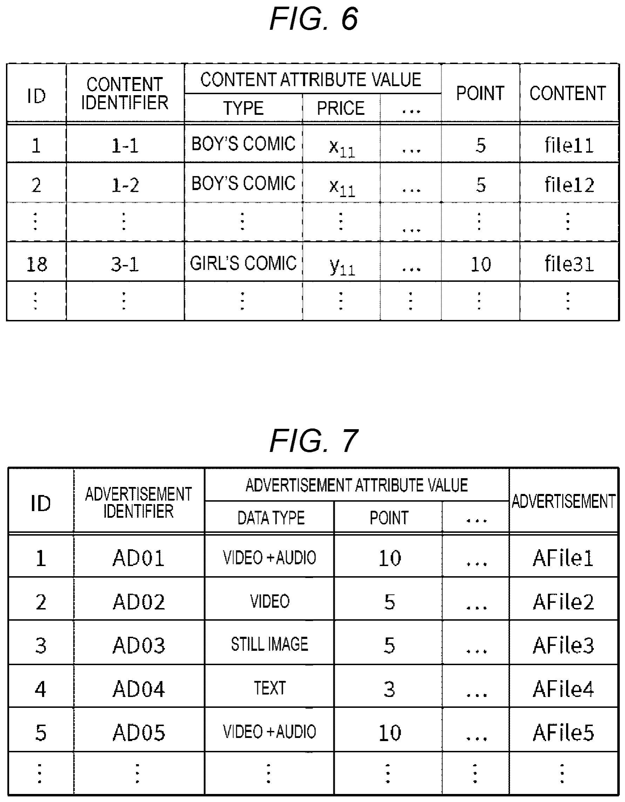

It is assumed that the content storage unit 111 of the content output apparatus 1 stores a content management table in Fig. 6. The content management table is a table for managing content. The content management table manages one or more records having "ID", "content identifier", "content attribute value", "point", and "content". Here, the "content attribute value" is "type" and "price". The "point" is the number of points consumed for outputting content. The "content" is a file name of the comic. Entity data specified by the file name is present in the content storage unit 111.

It is also assumed that the advertisement management unit 112 stores an advertisement management table in Fig. 7. The advertisement management table is a table for managing advertisements. The advertisement management table manages one or more records having "ID", "advertisement identifier", "advertisement attribute value", and "advertisement". Here, the "advertisement attribute value" is "data type" and "point". The "point" is the number of points obtained by viewing an advertisement. The "advertisement" is a file name of the advertisement. Entity data specified by the file name is present in the advertisement management unit 112.

It is also assumed that the status management unit 113 stores the number of points held by the user. It is also assumed that the status management unit 113 initially stores a ticket that unconditionally allows the user to read only one (one volume of) comic. Note that the ticket is an example of the status information. In addition, an initial value of the point is "0".

It is assumed that the control information management unit 114 stores app identifiers "app 5" and "app 8" of apps on which an advertisement cannot be superimposed and output. It is assumed that these app identifiers are identifiers of apps designated by the user of the content output apparatus 1.

Two specific examples in the above situation will be described. A specific example 1 is a case where an advertisement is output by PinP on the home screen. A specific example 2 is a case where an advertisement is output by PinP on a window of an app.

### (Specific Example 1)

It is assumed that the user of the content output apparatus 1 inputs a content output instruction having a content identifier "1-1" to the content output apparatus 1. Then, the instruction acceptance unit 121 of the content output apparatus 1 accepts the content output instruction "<content identifier>1-1". Next, the content acquisition unit 132 acquires the content identifier "1-1" included in the content output instruction.

Next, the determination unit 131 refers to the status management unit 113 and detects that the status information that is the ticket allowing the user to read only one volume of comic is present. The determination unit 131 acquires a determination result "output enabled".

Next, the content acquisition unit 132 acquires, from the content storage unit 111, the entity data of a comic identified by content "file 11" identified by the content identifier "1-1". The content output unit 141 outputs the comic.

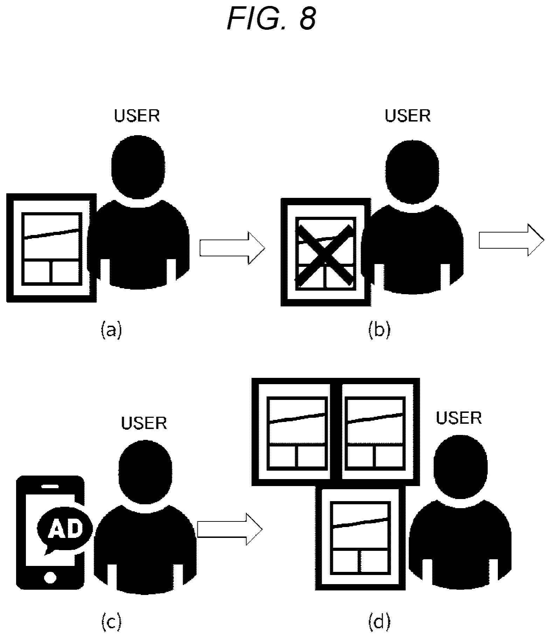

Next, it is assumed that the user operates the content output apparatus 1, and finishes reading the comic while turning the output page of the comic (see Fig. 8A). The content acquisition unit 132 determines that the output of the content is completed.

Next, the status changing unit 134 deletes the ticket of the status management unit 113 in response to the completion of the output of the content. Such deletion is also updating of the status information.

Next, it is assumed that the user inputs a content output instruction "<content identifier>1-2" to the content output apparatus 1 in order to read the second volume of the comic. Then, the instruction acceptance unit 121 accepts the content output instruction. Next, the content acquisition unit 132 acquires the content identifier "1-2" included in the content output instruction.

Next, the determination unit 131 refers to the status management unit 113, detects that there is no ticket that allows the user to read only one volume of comic and "the number of points = 0", and determines that the content output condition (there is a ticket OR the number of points >= a point paired with a content identifier) is not satisfied. The determination unit 131 acquires a determination result "output disabled".

Next, the output unit 14 outputs, to the content output apparatus 1, a message indicating that the comic instructed to be output cannot be output (see Fig. 8B). In Fig. 8B, the message includes "×".

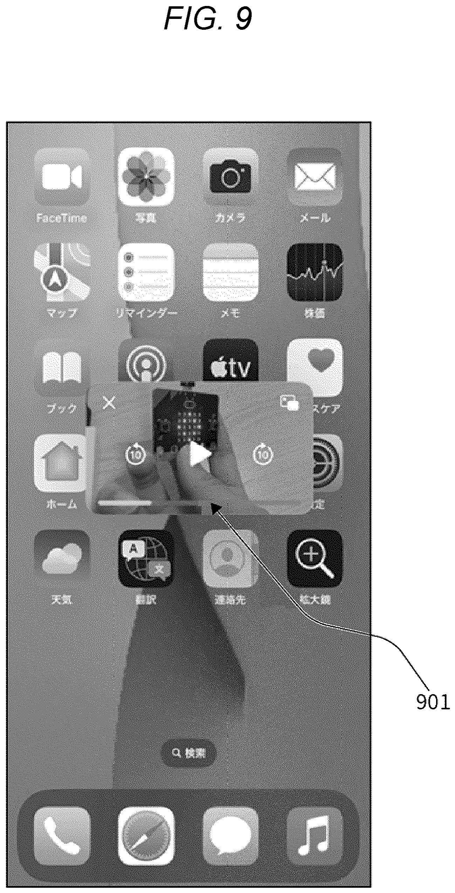

Next, the advertisement acquisition unit 133 and the like perform a process for outputting an advertisement. That is, the advertisement acquisition unit 133 randomly acquires an advertisement from the advertisement management table (Fig. 7), for example. Next, the advertisement output unit 142 determines that no app is running. The advertisement output unit 142 outputs the acquired advertisement by PinP on the home screen. Such an image view is illustrated in Fig. 9. In Fig. 9, an advertisement 901 is output by PinP on the home screen. It is assumed that the user finishes viewing the advertisement 901 in Fig. 9.

It is also assumed that the user inputs an advertisement output instruction to the content output apparatus 1 to read three more volumes of comics (content identifiers "1-2", "1-3", and "1-4") and views the advertisement (see Fig. 8C). As a result, the number of points "15" is assumed to be accumulated in the status management unit 113.

Next, it is assumed that the user inputs a content output instruction including the content identifiers "1-2" to "1-4" to the content output apparatus 1. The content output apparatus 1 sequentially outputs the comic identified by "1-2", the comic identified by "1-3", and the comic identified by "1-4" (see Fig. 8D). As a result, the user can read the three volumes of comics identified by "1-2" to "1-4".

### (Specific Example 2)

Similarly to the specific example 1, it is assumed that the user of the content output apparatus 1 inputs the content output instruction having the content identifier "1-1" to the content output apparatus 1, and the user finishes reading the comic identified by the content identifier "1-1".

The status changing unit 134 deletes the ticket of the status management unit 113 in response to the completion of the output of the content.

Next, it is assumed that the user inputs an instruction to start an app (search engine α) identified by an app identifier "app 1". Note that the start instruction is, for example, a double click of an icon of the app.

Next, the instruction acceptance unit 121 accepts the app start instruction. Next, the processing unit 13 reads out the app "search engine α.exe" corresponding to the app start instruction from the storage unit 11 and starts the "search engine α".

Next, the determination unit 131 says the second determination processing. That is, the determination unit 131 acquires the status information "point = 0" of the status management unit 113. Next, the determination unit 131 determines that the status information satisfies the advertisement output condition "there is no ticket AND point <= 0".

Next, the determination unit 131 acquires the control information "app 5" and "app 8" of the control information management unit 114. The determination unit 131 also acquires the app identifier "app 1" of the running app.

Next, the determination unit 131 detects that the acquired app identifier is not included in the control information, and determines that an advertisement can be output on a window of the running app "search engine α". The determination unit 131 acquires a determination result "output advertisement".

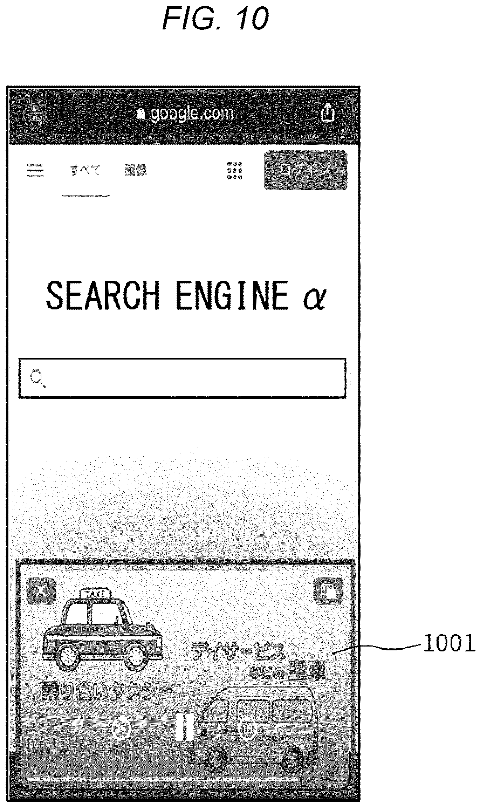

Next, the advertisement acquisition unit 133 acquires an advertisement paired with an advertisement attribute value satisfied by the app "search engine". Next, the advertisement output unit 142 outputs the advertisement by PinP on the window of the app "search engine α". Such an output example is illustrated in Fig. 10. In Fig. 10, reference numeral 1001 denotes the advertisement.

As a result of the advertisement output, the status changing unit 134 changes the point that is the status information of the status management unit 113 from "0" to "5" paired with the output advertisement.

As described above, according to the present embodiment, it is possible to achieve both of allowing the user to comfortably view content and having the user view an advertisement.

In addition, according to the present embodiment, it is possible to encourage the user to view an advertisement.

Moreover, according to the present embodiment, one advertisement may be output in order to view one content. In such a case, it is unnecessary to manage points associated with content and manage points associated with advertisements.

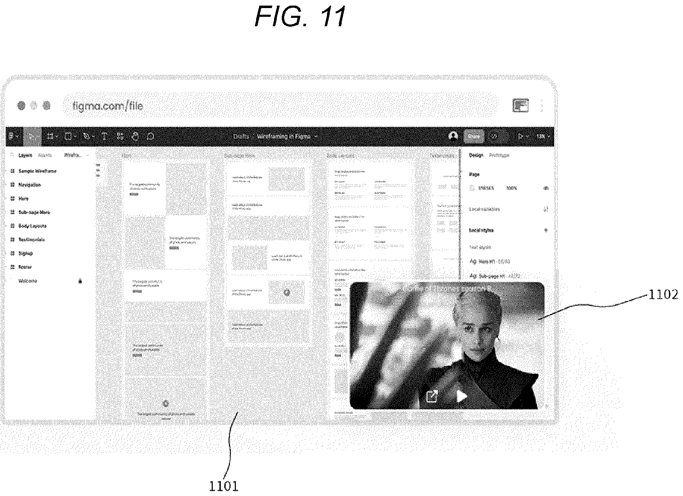

In the specific examples of the present embodiment, the apparatus that outputs content or an advertisement is a smartphone. However, as described above, the apparatus that outputs content or an advertisement may be a tablet terminal, a personal computer, or the like. An advertisement output example in such a case is illustrated in Fig. 11. In Fig. 11, an advertisement 1102 is output by PinP on a screen (window) on which an application 1101 is displayed.

In addition, the processing in the present embodiment may be realized by software. The software may be distributed by software download or the like. The software may also be recorded on a recording medium such as a CD-ROM and distributed. Note that the same also applies to other embodiments in the present specification. Note that the software that realizes the content output apparatus 1 in the present embodiment is the following program. That is, the program is a program causing a computer to function as: an advertisement acquisition unit configured to acquire an advertisement from an advertisement management unit that stores one or more advertisements; an advertisement output unit configured to output the advertisement acquired by the advertisement acquisition unit; a status changing unit configured to change status information related to an advertisement output status of a status management unit that manages the status information; an instruction acceptance unit configured to accept a content output instruction; a determination unit configured to refer to the status management unit and determine whether or not the status management unit satisfies a content output condition for outputting content corresponding to the output instruction; a content acquisition unit configured to acquire the content specified by the output instruction from a content storage unit that stores two or more pieces of content in a case where the determination unit determines that the content output condition is satisfied; and a content output unit configured to output the content acquired by the content acquisition unit only in the case where the determination unit determines that the content output condition is satisfied.

It is preferable that the above program operates in the background and monitors the starts and operations of other apps.

In the present embodiment, for example, the operation in the above program may be realized by two applications. That is, in the above program, an application that performs a function of outputting content and an application that performs a function of outputting an advertisement may be separated. In addition, there may be two or more applications that perform the function of outputting content, and one application that performs the function of outputting an advertisement for the two or more applications. In such a case, it is preferable that the app that performs the function of outputting an advertisement operates in the background, and monitors the operation of the app that performs the function of outputting content and monitors the starts and operations of other apps.

The application (program) that performs the function of outputting content in such a case is a program causing a computer to function as: an instruction acceptance unit configured to accept a content output instruction; a determination unit configured to refer to a status management unit that manages status information related to an advertisement output status and determine whether or not the status management unit satisfies a content output condition for outputting content corresponding to the output instruction; a content acquisition unit configured to acquire the content specified by the output instruction from a content storage unit that stores two or more pieces of content in a case where the determination unit determines that the content output condition is satisfied; and a content output unit configured to output the content acquired by the content acquisition unit only in the case where the determination unit determines that the content output condition is satisfied.

In addition, the application (program) that performs the function of outputting an advertisement in such a case is a program causing a computer to function as: an advertisement acquisition unit configured to acquire an advertisement from an advertisement management unit that stores one or more advertisements; an advertisement output unit configured to output the advertisement acquired by the advertisement acquisition unit; a status changing unit configured to change status information of a status management unit that manages status information related to an advertisement output status in the advertisement output unit; and a completion acceptance unit configured to accept that content output is completed, wherein the advertisement output unit outputs the advertisement in a case where the completion acceptance unit accepts that the output is completed.

Note that both of the app that performs the function of outputting content and the app that performs the function of outputting an advertisement can access the same status management unit.

In addition, the app that performs the function of outputting an advertisement may cause the computer to function such that the advertisement output unit outputs the advertisement after the content output unit completes the content output. Moreover, the app that performs the function of outputting an advertisement may cause the computer to function such that the advertisement output unit outputs the advertisement on a window of a running application or on a home screen after the content output unit completes the content output.

In the first embodiment, the content output apparatus 1 has the function of outputting content and the function of outputting an advertisement. However, the processing executed in the content output apparatus 1 described above may be shared and executed by two information processing apparatuses. For example, a first information processing apparatus may output content, and a second information processing apparatus capable of establishing communication connection with the first information processing apparatus may output an advertisement.

### (Second Embodiment)

The present embodiment is different from the first embodiment in that the content output apparatus is a server that provides content or distributes an advertisement.

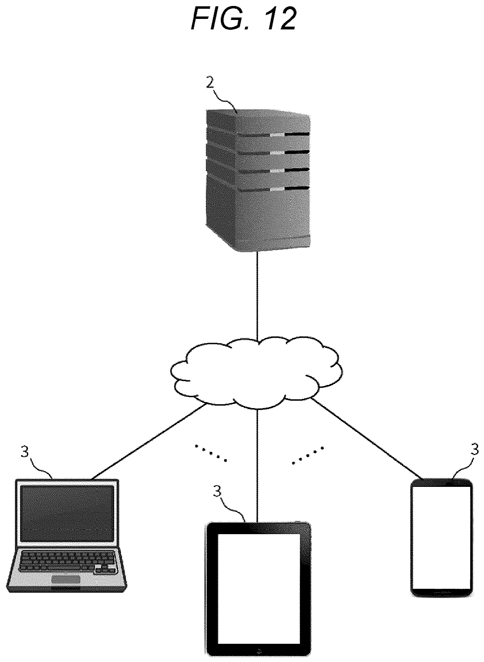

Fig. 12 is a conceptual drawing of an information system A according to the present embodiment. The information system A includes a content output apparatus 2 and one or two or more terminal apparatuses 3.

The content output apparatus 2 is, for example, a cloud server or an ASP server, but is not limited to a particular type. The terminal apparatus 3 is a terminal used by a user. The terminal apparatus 3 is, for example, a smartphone, a tablet terminal, a personal computer, or the like, but is not limited to a particular type.

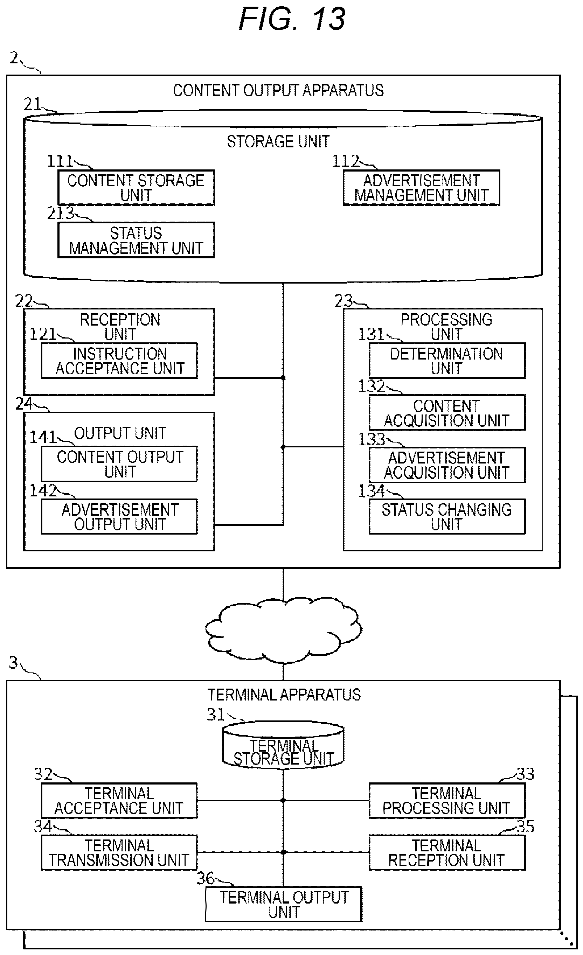

Fig. 13 is a block diagram of the information system A according to the present embodiment. The content output apparatus 2 includes a storage unit 21, a reception unit 22, a processing unit 23, and a transmission unit 24.

The storage unit 21 includes a content storage unit 111, an advertisement management unit 112, and a status management unit 213. The reception unit 22 includes an instruction acceptance unit 121. The processing unit 23 includes a determination unit 131, a content acquisition unit 132, an advertisement acquisition unit 133, and a status changing unit 134. The transmission unit 24 includes a content output unit 141 and an advertisement output unit 142.

The terminal apparatus 3 includes a terminal storage unit 31, a terminal acceptance unit 32, a terminal processing unit 33, a terminal transmission unit 34, a terminal reception unit 35, and a terminal output unit 36.

The status management unit 213 constituting the content output apparatus 2 stores status information for each of two or more user identifiers.

The storage unit 21 may include a control information management unit 114. In such a case, the control information management unit 114 may store control information for each of two or more user identifiers. Note that the control information may be common to all users.

The content output unit 141 transmits content acquired by the content acquisition unit 132 to the terminal apparatus 3.

The advertisement output unit 142 transmits an advertisement acquired by the advertisement acquisition unit 133 to the terminal apparatus 3.

The reception unit 22 receives various instructions and various types of information from the terminal apparatus 3. The instruction acceptance unit 121 constituting the reception unit 22 receives various instructions from the terminal apparatus 3. Examples of the various instructions include a content output instruction and an advertisement output instruction.

The processing unit 23 performs various types of processing. Examples of the various types of processing include processing performed by the determination unit 131, the content acquisition unit 132, the advertisement acquisition unit 133, or the status changing unit 134.

The transmission unit 24 transmits various types of information to the terminal apparatus 3. Examples of the various types of information include content and advertisements.

The terminal storage unit 31 constituting the terminal apparatus 3 stores various types of information. Examples of the various types of information include a user identifier. The terminal storage unit 31 may include a control information management unit 114.

The terminal acceptance unit 32 accepts various instructions and various types of information. Examples of the various instructions include a content output instruction, an app start instruction, and an advertisement output instruction. The acceptance here is normally acceptance of information input from an input device such as a touch panel, a keyboard, or a mouse, but may be a concept including reception of information transmitted via a wired or wireless communication line, acceptance of information read from a recording medium such as an optical disk, a magnetic disk, or a semiconductor memory, and the like.

The terminal processing unit 33 performs various types of processing. Examples of the various types of processing include a process of converting an instruction or information accepted by the terminal acceptance unit 32 into an instruction or information having a data structure to be transmitted. Examples of the various types of processing include a process of converting information received by the terminal reception unit 35 into information having a data structure to be output.

The terminal transmission unit 34 transmits various instructions and various types of information. Examples of the various instructions and various types of information include a content output instruction and an advertisement output instruction.

The terminal reception unit 35 receives various types of information. Examples of the various types of information include content and advertisements.

The terminal output unit 36 outputs various types of information. Examples of the various types of information include an app screen, content, and advertisements.

It is preferable that the terminal output unit 36 outputs an advertisement by PinP on a home screen or on a window of an app.

The output here is usually displaying on a display or projection using a projector, but may be a concept including printing by a printer, sound output, transmission to an external apparatus, accumulation on a recording medium, delivery of a processing result to another processing apparatus or another program, and the like.

The storage unit 21 and the terminal storage unit 31 are preferably nonvolatile recording media, but can also be realized by volatile recording media.

The process of storing information in the storage unit 21 and the like is not limited. For example, information may be stored in the storage unit 21 and the like via a recording medium, information transmitted via a communication line or the like may be stored in the storage unit 21 and the like, or information input via an input device may be stored in the storage unit 21 and the like.

The reception unit 22, the instruction acceptance unit 121, the transmission unit 24, the content output unit 141, the advertisement output unit 142, the terminal transmission unit 34, and the terminal reception unit 35 are usually realized by a wireless or wired communication device.

The processing unit 23 and the terminal processing unit 33 can be usually realized by a processor, a memory, or the like. Processing procedures of the processing unit 23 and the like are usually realized by software, which is recorded in a recording medium such as a ROM. However, the processing procedures may be realized by hardware (dedicated circuit). Note that the processor is a CPU, an MPU, a GPU, or the like, and is not limited to a particular type.

The terminal acceptance unit 32 can be realized by a device driver of an input device such as a touch panel or a keyboard, control software of a menu screen, or the like.

The terminal output unit 36 may be considered to include or not include an output device such as a display or a speaker. The terminal output unit 36 can be realized by driver software of an output device, or driver software of an output device and the output device, or the like.

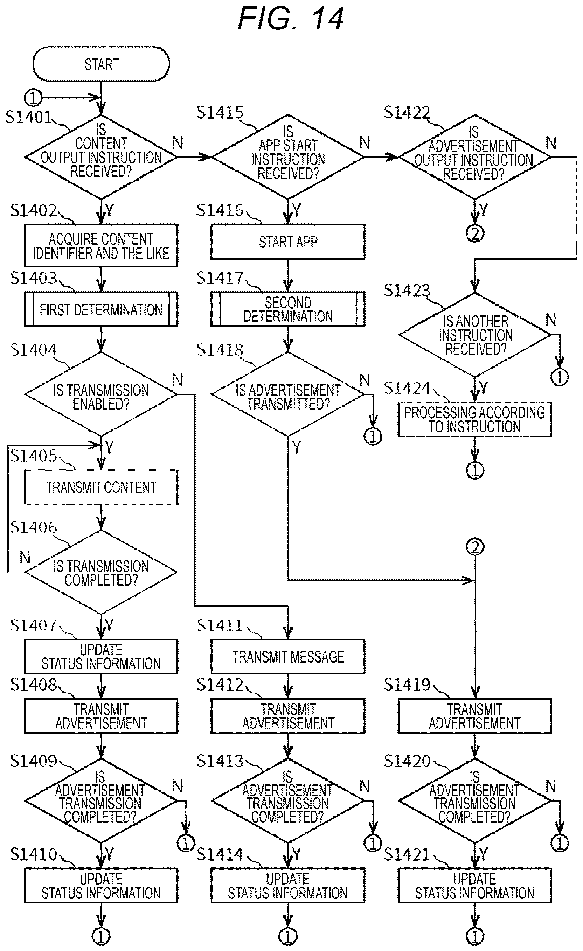

Next, an operation example of the content output apparatus 2 constituting the information system A will be described with reference to a flowchart of Fig. 14.

(Step S1401) The instruction acceptance unit 121 determines whether or not a content output instruction has been received from the terminal apparatus 3. In a case where the content output instruction has been received, the process proceeds to step S1402. In a case where the content output instruction has not been received, the process proceeds to step S1415. Note that the content output instruction has a content identifier and a user identifier.

(Step S1402) The content acquisition unit 132 acquires the content identifier and the user identifier included in the received content output instruction.

(Step S1403) The determination unit 131 determines whether or not to transmit content. That is, the determination unit 131 acquires, for example, status information paired with the user identifier acquired in step S1402. Next, the determination unit 131 determines whether or not the status information satisfies a content output condition (for example, "the number of points is not negative", "a ticket for outputting content is provided"), and acquires a determination result.

(Step S1404) When the determination result in step S1403 indicates that content transmission is enabled, the process proceeds to step S1405. When the transmission is disabled, the process proceeds to step S1411.

(Step S1405) The content acquisition unit 132 acquires content identified by the content identifier acquired in step S1402 from the content storage unit 111. The content output unit 141 transmits the content acquired by the content acquisition unit 132 to the terminal apparatus 3.

(Step S1406) The content acquisition unit 132 acquires all pieces of the content identified by the content identifier acquired in step S1402, and determines whether or not the output of the content is completed. In a case where the output of the content is completed, the process proceeds to step S1407. In a case where the output of the content is not completed, the process returns to step S1405.

(Step S1407) The status changing unit 134 updates the status information paired with the user identifier in response to the completion of the transmission of the content.

The status changing unit 134, for example, updates the status information paired with the user identifier acquired in step S1402 to status information indicating that next content cannot be transmitted. The status changing unit 134 deletes the status information paired with the user identifier, the status information indicating that next content can be transmitted, for example. The status changing unit 134 accumulates the status information indicating that next content cannot be transmitted in association with the user identifier, for example. The status changing unit 134 reduces the current number of points indicated by the status information paired with the user identifier by the number of points paired with the transmitted content, for example.

(Step S1408) The advertisement acquisition unit 133 and the like perform a process for transmitting an advertisement. That is, the advertisement acquisition unit 133 randomly acquires an advertisement from the advertisement management unit 112, for example. Next, the advertisement output unit 142 transmits the advertisement to the terminal apparatus 3. In the terminal apparatus 3, it is preferable that the advertisement is output by PinP.

(Step S1409) The status changing unit 134 determines whether or not the transmission of the advertisement is completed in step S1408. In a case where the transmission of the advertisement is completed, the process proceeds to step S1410. In a case where the transmission of the advertisement is not completed, the process returns to step S1401. Note that the case where the transmission of the advertisement is not completed is, for example, a case where information indicating that the output of the advertisement is interrupted midway during the output of the advertisement as a stream is received from the terminal apparatus 3.

(Step S1410) The status changing unit 134 updates the status information of the status management unit 213 in response to the completion of the transmission of the advertisement. The process returns to step S1401. Note that the completion of the transmission of the advertisement means that all the data of one advertisement as a stream has been transmitted to the terminal apparatus 3.

The status changing unit 134, for example, updates the status information paired with the user identifier to status information indicating that next content can be transmitted. The status changing unit 134 deletes the status information paired with the user identifier, the status information indicating that next content cannot be transmitted, for example. The status changing unit 134 accumulates the status information indicating that next content can be transmitted in association with the user identifier, for example. The status changing unit 134 increases the current number of points indicated by the status information paired with the user identifier by the number of points paired with the transmitted advertisement, for example.

(Step S1411) The output unit 14 transmits a message indicating that the content instructed to be output cannot be transmitted to the terminal apparatus 3.

(Step S1412) The advertisement acquisition unit 133 and the like perform a process for transmitting an advertisement. That is, the advertisement acquisition unit 133 randomly acquires an advertisement from the advertisement management unit 112, for example. Next, the advertisement output unit 142 transmits the advertisement to the terminal apparatus 3. In the terminal apparatus 3, it is preferable that the advertisement is output by PinP.

(Step S1413) The status changing unit 134 determines whether or not the transmission of the advertisement is completed in step S1412. In a case where the transmission of the advertisement is completed, the process proceeds to step S1414. In a case where the transmission of the advertisement is not completed, the process returns to step S1401.

(Step S1414) The status changing unit 134 updates the status information of the status management unit 213 in response to the completion of the transmission of the advertisement. The process returns to step S1401.

The status changing unit 134, for example, updates the status information paired with the user identifier to status information indicating that next content can be transmitted. The status changing unit 134 deletes the status information paired with the user identifier, the status information indicating that next content cannot be transmitted, for example. The status changing unit 134 accumulates the status information indicating that next content can be transmitted in association with the user identifier, for example. The status changing unit 134 increases the current number of points indicated by the status information paired with the user identifier by the number of points paired with the transmitted advertisement, for example.

(Step S1415) The instruction acceptance unit 121 determines whether or not an app start instruction has been received. In a case where the app start instruction has been received, the process proceeds to step S1416. In a case where the app start instruction has not been received, the process proceeds to step S1422.

(Step S1417) The determination unit 131 determines whether or not to transmit an advertisement. Such determination is referred to as second determination processing. For example, the determination unit 131 acquires status information paired with a user identifier included in the app start instruction, determines whether or not the status information satisfies an advertisement output condition, and acquires a determination result. Note that the advertisement output condition is, for example, that "a points that is status information is negative" and "a ticket for transmitting content is not present in status information".

(Step S1418) When the determination result in step S1417 is "transmit advertisement", the process proceeds to step S1419. When the determination result is "not transmit advertisement", the process returns to step S1401.

(Step S1419) The advertisement acquisition unit 133 and the like perform a process for transmitting an advertisement. That is, the advertisement acquisition unit 133 randomly acquires an advertisement from the advertisement management unit 112, for example. Next, the advertisement output unit 142 transmits the advertisement to the terminal apparatus 3. In the terminal apparatus 3, it is preferable that the advertisement is output by PinP.

(Step S1420) The status changing unit 134 determines whether or not the transmission of the advertisement is completed in step S1419. In a case where the transmission of the advertisement is completed, the process proceeds to step S1421. In a case where the transmission of the advertisement is not completed, the process returns to step S1401.

(Step S1421) The status changing unit 134 updates the status information of the status management unit 213 that is paired with the user identifier in response to the completion of the transmission of the advertisement. The process returns to step S1401.

The status changing unit 134, for example, updates the status information paired with the user identifier to status information indicating that next content can be transmitted. The status changing unit 134 deletes the status information paired with the user identifier, the status information indicating that next content cannot be transmitted, for example. The status changing unit 134 accumulates the status information indicating that next content can be transmitted in association with the user identifier, for example. The status changing unit 134 increases the current number of points indicated by the status information paired with the user identifier by the number of points paired with the transmitted advertisement, for example.

(Step S1422) The acceptance unit 12 determines whether or not an advertisement output instruction has been received from the terminal apparatus 3. In a case where the advertisement output instruction has been received, the process proceeds to step S1419. In a case where the advertisement output instruction has not been received, the process proceeds to step S1423.

(Step S1423) The acceptance unit 12 determines whether or not another instruction has been received. In a case where the other instruction has been received, the process proceeds to step S1424. In a case where the other instruction has not been received, the process returns to step S1401.

(Step S1424) The processing unit 13 performs processing according to the other instruction. The process returns to step S1401.

In the flowchart of Fig. 14, the process ends by power off or processing end interruption.

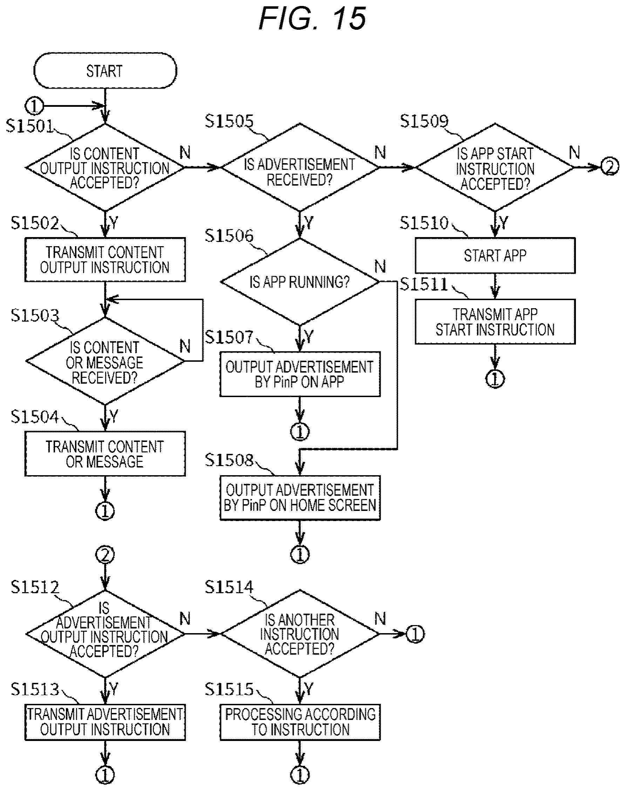

Next, an operation example of the terminal apparatus 3 will be described with reference to a flowchart of Fig. 15.

(Step S1501) The terminal acceptance unit 32 determines whether or not a content output instruction has been accepted. In a case where the content output instruction has been accepted, the process proceeds to step S1502. In a case where the content output instruction has not been accepted, the process proceeds to step S1505.

(Step S1502) The terminal processing unit 33 acquires the user identifier of the terminal storage unit 31, and configures a content output instruction to be transmitted, including the user identifier and a content identifier included in the content output instruction accepted in step S1501. The terminal transmission unit 34 transmits the content output instruction to the content output apparatus 2.

(Step S1503) The terminal reception unit 35 determines whether or not content or a message has been received from the content output apparatus 2. In a case where the content or the like has been received, the process proceeds to step S1504. In a case where the content or the like has not been received, the process returns to step S1503.

(Step S1504) The terminal output unit 36 outputs the content or the message. The process returns to step S1501.

(Step S1505) The terminal reception unit 35 determines whether or not an advertisement has been received. In a case where the advertisement has been received, the process proceeds to step S1506. In a case where the advertisement has not been received, the process proceeds to step S1509.

(Step S1506) The terminal processing unit 33 determines whether or not any app is running. When any app is running, the process proceeds to step S1507. When no app is running, the process proceeds to step S1508.

(Step S1507) The terminal output unit 36 outputs the advertisement received by PinP on a window of the running app. The process returns to step S1501.

(Step S1508) The terminal output unit 36 outputs the advertisement received by PinP on the home screen. The process returns to step S1501.

(Step S1509) The terminal acceptance unit 32 determines whether or not an app start instruction has been accepted. In a case where the app start instruction has been accepted, the process proceeds to step S1510. In a case where the app start instruction has not been accepted, the process proceeds to step S1512.

(Step S1510) The terminal processing unit 33 starts an app corresponding to the start instruction.

(Step S1511) The terminal processing unit 33 acquires the user identifier of the terminal storage unit 31, and configures an app start instruction including the user identifier. The terminal transmission unit 34 transmits the app start instruction to the content output apparatus 2. The process returns to step S1501.

Note that it is preferable that the terminal apparatus 3 receives an advertisement from the content output apparatus 2 on the basis of the transmission of the app start instruction and outputs the advertisement by PinP on the window of the app.

(Step S1512) The terminal acceptance unit 32 determines whether or not an advertisement output instruction has been accepted. In a case where the advertisement output instruction has been accepted, the process proceeds to step S1513. In a case where the content output instruction has not been accepted, the process proceeds to step S1514.

(Step S1513) The terminal processing unit 33 acquires the user identifier of the terminal storage unit 31, and configures an advertisement output instruction including the user identifier. The terminal transmission unit 34 transmits the advertisement output instruction to the content output apparatus 2. The process returns to step S1501.

(Step S1514) The terminal acceptance unit 32 determines whether or not another instruction has been accepted. In a case where the other instruction has been accepted, the process proceeds to step S1514. In a case where the other instruction has not been accepted, the process returns to step S1501.

(Step S1515) The terminal processing unit 33 performs processing according to the other instruction. The process returns to step S1501. Here, the other instruction may be transmitted to the content output apparatus 2.

In the flowchart of Fig. 15, the process ends by power off or processing end interruption.

Hereinafter, a specific operation example of the information system A in the present embodiment will be described. The content output by the content output apparatus 2 here is assumed to be, for example, a comic.

It is now assumed that the content storage unit 111 of the content output apparatus 2 stores the content management table in Fig. 6. It is also assumed that the advertisement management unit 112 of the content output apparatus 2 stores the advertisement management table in Fig. 7.

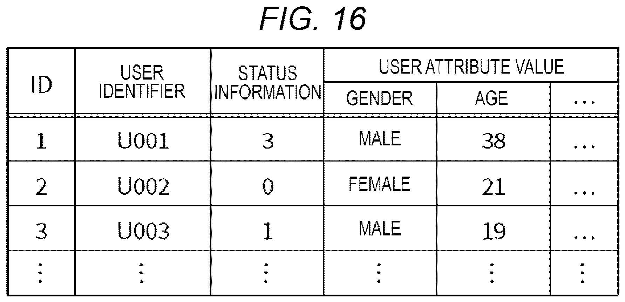

It is also assumed that the status management unit 213 stores a user management table illustrated in Fig. 16. The user management table is a table that manages user information of each user. The user management table manages one or more records having "ID", "user identifier", "status information", and "user attribute value". Here, the "user attribute value" has "gender" and "age". Here, the "status information" is a point. The point indicates the number of pieces of content that can be browsed. Here, it is assumed that a point given when the user is registered in the content output apparatus 2 is "1". That is, the user can browse only one volume of comic without viewing an advertisement after user registration.

In Fig. 16, since a user (hereinafter, user 1) with a user identifier "U001" views two advertisements without reading any comic after user registration, the status information (point) of the user is "3". That is, the user can read three volumes of comics for free in the future without viewing an advertisement.

In Fig. 16, since a user (hereinafter, user 2) with a user identifier "U002" has read one volume of comic after user registration, the status information (point) of the user is changed from the initial value "1" to "0". That is, the user cannot read any comic in the future without viewing an advertisement.

In Fig. 16, it is assumed that a user (hereinafter, user 3) having a user identifier "U003" has just performed user registration. That is, the status information (point) of the user is the initial value of "1", and the user can read only one volume of comic in the future without viewing an advertisement.

The following two specific examples in the above situation will be described. A specific example 1 is a case where the user 2 inputs a content output instruction, and cannot browse a comic. A specific example 2 is a case where the user 3 inputs a content output instruction, and can browse a comic.

### (Specific Example 1)

It is assumed that the user 2 inputs a content output instruction to the terminal apparatus 3. Then, the terminal acceptance unit 32 accepts the content output instruction. Next, the terminal processing unit 33 acquires the user identifier "U002" of the terminal storage unit 31, and configures a content output instruction "<user identifier>U002 content identifier>1-2" to be transmitted, including the user identifier and a content identifier (for example, "1-2") included in the content output instruction. The terminal transmission unit 34 transmits the content output instruction to the content output apparatus 2.

Next, the instruction acceptance unit 121 of the content output apparatus 2 receives the content output instruction from the terminal apparatus 3. Next, the content acquisition unit 132 acquires the content identifier "1-2" and the user identifier "U002" included in the content output instruction.

Next, the determination unit 131 acquires status information "0" paired with the user identifier "U002" from the user management table (Fig. 16). Next, the determination unit 131 determines that the status information "0" does not satisfy the content output condition (status information >= 1), and acquires a determination result "transmission disabled".

Next, the output unit 14 transmits a message indicating that the content instructed to be output cannot be transmitted to the terminal apparatus 3.

Next, the terminal reception unit 35 of the terminal apparatus 3 receives the message from the content output apparatus 2. Next, the terminal output unit 36 outputs the message.

Moreover, the advertisement acquisition unit 133 of the content output apparatus 2 randomly acquires an advertisement from the advertisement management table (Fig. 8). Next, the advertisement output unit 142 transmits the advertisement to the terminal apparatus 3.

Next, the terminal reception unit 35 of the terminal apparatus 3 receives the advertisement from the content output apparatus 2. Next, the terminal processing unit 33 determines that no app is running. Next, the terminal output unit 36 outputs the advertisement received by PinP on the home screen. Such an output example is illustrated in Fig. 9.

In a case where the terminal apparatus 3 is a personal computer and, for example, one window is displayed on the screen, the terminal apparatus 3 outputs the advertisement on the one window by PinP, for example, as illustrated in Fig. 11.

### (Specific Example 2)

It is assumed that the user 3 inputs a content output instruction to the terminal apparatus 3 for the first time after user registration. Then, the terminal acceptance unit 32 accepts the content output instruction. Next, the terminal processing unit 33 acquires the user identifier "U003" of the terminal storage unit 31, and configures a content output instruction "<user identifier>U003 content identifier>1-1" to be transmitted, including the user identifier and a content identifier (for example, "1-1") included in the content output instruction. The terminal transmission unit 34 transmits the content output instruction to the content output apparatus 2.

Next, the instruction acceptance unit 121 of the content output apparatus 2 receives the content output instruction from the terminal apparatus 3. Next, the content acquisition unit 132 acquires the content identifier "1-1" and the user identifier "U003" included in the content output instruction.

Next, the determination unit 131 acquires status information "1" paired with the user identifier "U003" from the user management table (Fig. 16). Next, the determination unit 131 determines that the status information "1" satisfies the content output condition (status information >= 1), and acquires a determination result "transmission enabled".

Next, the content acquisition unit 132 acquires content "file 11" identified by the content identifier "1-1" from the content management table (Fig. 6). The content output unit 141 transmits the content "file 11" acquired by the content acquisition unit 132 to the terminal apparatus 3.

Next, the terminal reception unit 35 of the terminal apparatus 3 receives the content "file 11" from the content output apparatus 2. Next, the terminal output unit 36 outputs the content "file 11".

In addition, the status changing unit 134 of the content output apparatus 2 updates the status information paired with the user identifier "U003" from "1" to "0" in response to the completion of the transmission of the content.

Thereafter, the user 3 can browse the comic. However, the user 3 cannot browse a next comic without viewing an advertisement.

As described above, according to the present embodiment, it is possible to achieve both of allowing each of two or more users to comfortably view content and having each user view an advertisement.

In addition, according to the present embodiment, it is possible to encourage the user to view an advertisement.

Note that the software that realizes the content output apparatus 2 in the present embodiment is the following program. That is, the program is a program causing a computer to function as: an advertisement acquisition unit configured to acquire an advertisement from an advertisement management unit that stores one or more advertisements; an advertisement output unit configured to output the advertisement acquired by the advertisement acquisition unit; a status changing unit configured to change status information related to an advertisement output status of a status management unit that manages the status information; an instruction acceptance unit configured to accept a content output instruction; a determination unit configured to refer to the status management unit and determine whether or not the status management unit satisfies a content output condition that is a condition for outputting content corresponding to the content output instruction; a content acquisition unit configured to acquire the content specified by the content output instruction from a content storage unit that stores two or more pieces of content in a case where the determination unit determines that the content output condition is satisfied; and a content output unit configured to output the content acquired by the content acquisition unit only in the case where the determination unit determines that the content output condition is satisfied.

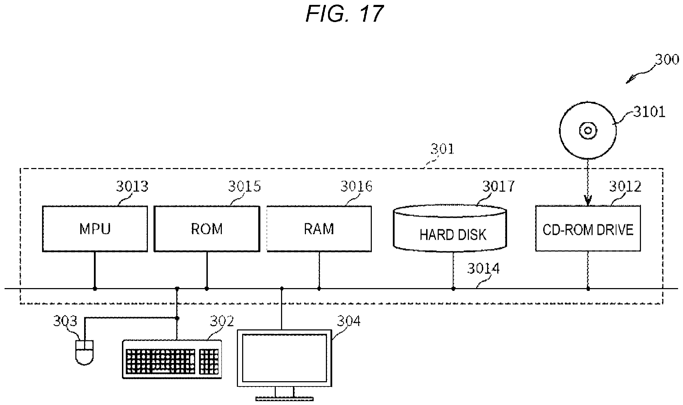

In addition, Fig. 17 is a block diagram of a computer system 300 that executes the program described in the present specification to realize the content output apparatus 1, the content output apparatus 2, or the terminal apparatus 3 of the various embodiments described above.

In Fig. 17, the computer system 300 includes a computer 301 including a CD-ROM drive, a keyboard 302, a mouse 303, and a monitor 304.

In Fig. 17, in addition to a CD-ROM drive 3012, the computer 301 includes an MPU 3013, a bus 3014 connected to the CD-ROM drive 3012 and the like, a ROM 3015 for storing a program such as a boot-up program, a RAM 3016 connected to the MPU 3013 and for temporarily storing a command of an application program and providing a temporary storage space, and a hard disk 3017 for storing an application program, a system program, and data. Although not illustrated here, the computer 301 may further include a network card that provides connection to a LAN.

A program that causes the computer system 300 to execute the functions of the content output apparatus 1 or the like of the above-described embodiments may be stored in the CD-ROM 3101, inserted into the CD-ROM drive 3012, and further transferred to the hard disk 3017. Alternatively, the program may be transmitted to the computer 301 via a network (not illustrated) and stored in the hard disk 3017. The program is loaded into the RAM 3016 at the time of execution. The program may be directly loaded from the CD-ROM 3101 or a network.

The program does not necessarily have to include an operating system (OS), a third-party program, or the like that causes the computer 301 to execute the functions of the content output apparatus 1 or the like of the above-described embodiments. The program only needs to include a command portion that calls an appropriate function (module) in a controlled mode to obtain a desired result. How the computer system 300 operates is well known, and detailed description thereof will be omitted.

In the above program, a step of transmitting information, a step of receiving information, and the like do not include processing performed by hardware, for example, processing performed by a modem, an interface card, or the like in the transmission step (processing performed only by hardware).

In addition, the number of computers for executing the above program may be one or more. That is, centralized processing or distributed processing may be performed.

In the second embodiment, the content output apparatus 2 has the function of outputting content and the function of outputting an advertisement. However, the processing executed in the content output apparatus 2 described above may be shared and executed by two information processing apparatuses. For example, a first information processing apparatus may output content, and a second information processing apparatus capable of establishing communication connection with the first information processing apparatus may output an advertisement.

In addition, in each of the above embodiments, it goes without saying that two or more communication devices present in one apparatus may be realized by physically one medium.

Moreover, in each of the above embodiments, each processing may be realized by being centrally processed by a single apparatus, or may be realized by being distributedly processed by a plurality of apparatuses.

The present invention is not limited to the above embodiments, and various modifications can be made. It goes without saying that they are also included in the scope of the present invention.

In the techniques according to Non Patent Literatures 1 and 2 described above, there are various restrictions on continuing to view content for free. Note that the restrictions are, for example, that the number of times free content can be viewed in one day is set, that not all pieces of content can be viewed for free, or that no content can be viewed unless an advertisement is viewed.

In addition, in Patent Literature 1 described above, it is difficult to achieve both of allowing the user to comfortably view content and having the user view an advertisement.

Therefore, in the first embodiment and the second embodiment, for example, a post-payment advertisement system is provided on which content (for example, a comic or music) requested by the user is output first, and an advertisement corresponding to the output content is viewed later.

In addition, in the first embodiment and the second embodiment, for example, a mechanism is provided on which an advertisement is displayed by using a picture-in-picture (PinP) function, so that the advertisement can be viewed to save a point even while another app is running.

### (Third Embodiment)

The description of the advertisement management unit, the status management unit, the determination unit, the advertisement acquisition unit, the status changing unit, the instruction acceptance unit, and the advertisement output unit, and the description of the processing in each unit in the first embodiment and the second embodiment can also be applied to a third embodiment as long as there is no contradiction. Furthermore, the description of the content storage unit, the content acquisition unit, and/or the content output unit and the description of the processing in each unit can also be applied to the third embodiment as long as there is no contradiction.

The third embodiment relates to a system including a server apparatus and a computer apparatus capable of establishing communication connection with the server apparatus, the system including an advertisement outputter configured to output an advertisement on a part of a window of one running application, that is, one active application displayed on the computer apparatus, or on a part of a home screen displayed on the computer apparatus. Here, the window of one active application is a concept including not only a window displayed in a part of a display screen but also the entire display screen in a case where content corresponding to one application is full-screen-displayed on the entire display screen.

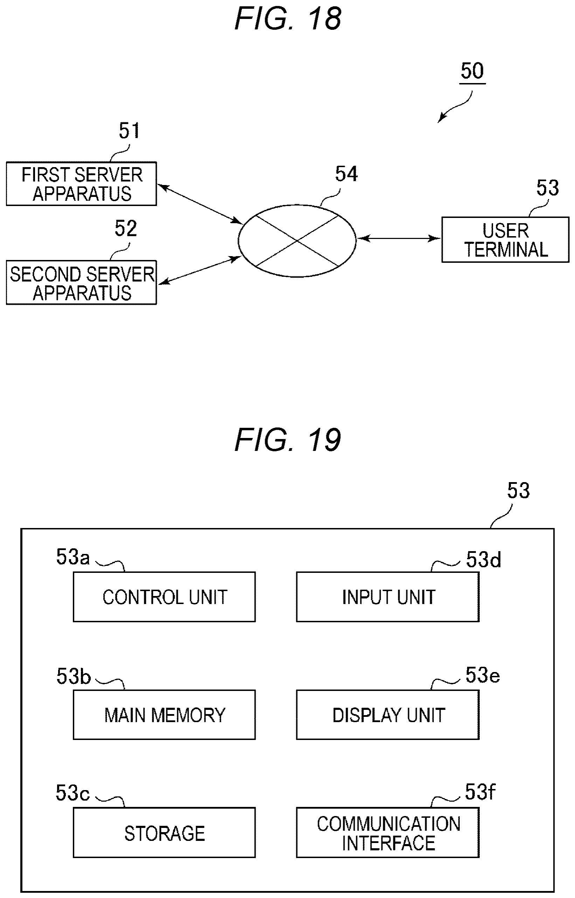

Fig. 18 is a block diagram illustrating a configuration of the system. A system 50 includes at least one computer apparatus, for example, a server apparatus. The system 50 may include a plurality of computer apparatuses, and a function as a server may be executed by the plurality of computer apparatuses.

For example, the system 50 includes a user terminal 53 operated by a user, a server apparatus, and a communication network 54. Hereinafter, the system 50 including a first server apparatus 51 and a second server apparatus 52 will be described as an example of the server, but the first server apparatus and the second server apparatus may be one server apparatus or may be physically integrated.

The user terminal 53 is capable of establishing communication connection with the first server apparatus 51 and/or the second server apparatus 52 via the communication network 54. The system 50 may include the single user terminal 53 or may include a plurality of the user terminals 53.

The user terminal 53 is not particularly limited as long as it is a computer apparatus having a display screen and an input unit. The user terminal 53 may be a stationary type or a portable type that can be carried by a user when the user moves. Examples of the user terminal 53 include a conventional mobile phone, a tablet terminal, a smartphone, and a desktop/notebook personal computer. The user terminal 53 is preferably a portable terminal such as a tablet terminal or a smartphone. The present invention can be suitably used in a tablet terminal or a smartphone on which a window of one application is usually set to be full-screen-displayed on the entire screen except for a case of being displayed in a PinP format.

Fig. 19 is a block diagram illustrating a configuration of the user terminal. The user terminal 53 includes a control unit 53a, a main memory 53b, a storage 53c, an input unit 53d, a display unit 53e, and a communication interface 53f, which are connected by a bus.

The control unit 53a includes a CPU and a ROM. The control unit 53a executes a program stored in the storage 53c and controls the user terminal 53. As the main memory 53b, for example, a RAM is used. The main memory 53b is a work area of the control unit 53a. The storage 53c is a storage area for storing a program and data. The control unit 53a performs arithmetic processing on the basis of a program read from the main memory 53b or a program stored in an external storage medium, and data input by the input unit 53d.

The display unit 53e has a display screen. The control unit 53a outputs a video signal for displaying an image on the display screen according to the result of arithmetic processing. Here, the display screen may be a touch panel including a touch sensor. In this case, the touch panel functions as the input unit 53d.

The communication interface 53f can be connected to the communication network 54 wirelessly or by wire, and can transmit and receive data to and from the first server apparatus 51 or the second server apparatus 52 via the communication network 54. Data received via the communication interface 53f is loaded into the main memory 53b, and arithmetic processing is performed by the control unit 53a.

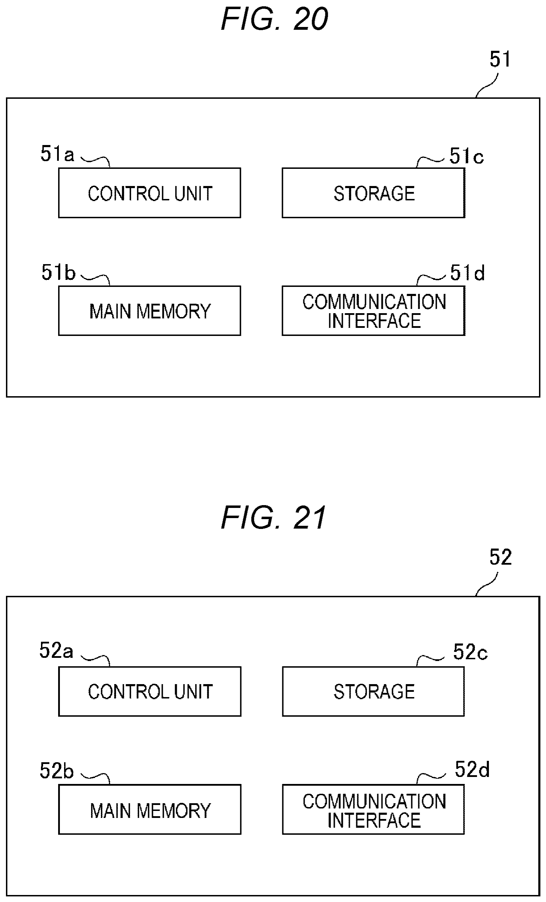

Fig. 20 is a block diagram illustrating a configuration of the first server apparatus 51. The first server apparatus 51 includes a control unit 51a, a main memory 51b, a storage 51c, and a communication interface 51d, which are connected by a bus.

The control unit 51a includes a CPU and a ROM, executes a program stored in the storage 51c, and controls the first server apparatus 51. In addition, the control unit 51a includes an internal timer that clocks time. The main memory 51b is a work area of the control unit 51a. The storage 51c is a storage area for storing a program and data. The control unit 51a performs program execution processing on the basis of a program read from the main memory 51b or a program stored in an external storage medium, information received from the user terminal 53, and the like.

Fig. 21 is a block diagram illustrating a configuration of the second server apparatus 52. The second server apparatus 52 includes a control unit 52a, a main memory 52b, a storage 52c, and a communication interface 52d, which are connected by a bus.

The control unit 52a includes a CPU and a ROM, executes a program stored in the storage 52c, and controls the second server apparatus 52. In addition, the control unit 52a includes an internal timer that clocks time. The main memory 52b is a work area of the control unit 52a. The storage 52c is a storage area for storing a program and data. The control unit 52a performs program execution processing on the basis of a program read from the main memory 52b or a program stored in an external storage medium, information received from the user terminal 53, and the like.

The first server apparatus 51 has a function of performing control so as to establish communication connection with the user terminal 53 and output an advertisement in the user terminal 53. An application (hereinafter, referred to as a first application) for accessing the first server apparatus 51 and displaying the advertisement on the display screen of the user terminal 53 is installed in the user terminal 53 operated by the user. The user starts the first application by operating the input unit 53d of the user terminal 53, and accesses the first server apparatus 51. Note that the first application may be a browser.

By operating the input unit 53d, the user can transmit an advertisement output request to the first server apparatus 51 using the function of the first application. When the first server apparatus 51 receives the advertisement output request, the advertisement stored in the first server apparatus 51 is transmitted to the user terminal 53. The user terminal 53 may download the advertisement or may receive the advertisement in a streaming format.

The main memory 51b of the first server apparatus 51 stores a user management table. The main memory 52b of the second server apparatus 52 may also store a user management table.

The user management table of the first server apparatus 51 or the second server apparatus 52 stores, in association with user identification information (user ID) for user identification, a history of advertisement output, information updated in response to transmission of an advertisement (data related to an advertisement) from the first server apparatus to the user terminal, or information updated in response to output of an advertisement from the user terminal. Examples of the information updated in response to transmission of an advertisement from the first server apparatus to the user terminal or the information updated in response to output of an advertisement from the user terminal include a point given to the user. The point is given to the user every time an advertisement is transmitted to the user terminal 53 or every time an advertisement is output in the user terminal 53, for example, and a point value is added and updated in the user management table. In addition, a different point value may be added depending on the advertisement. The given point is consumed when a predetermined request or predetermined information processing is executed in the first server apparatus 51, the second server apparatus 52, or the user terminal 53. The predetermined request and the predetermined information processing will be described later.

In addition, the information updated in response to transmission of an advertisement from the first server apparatus 51 to the user terminal 53 or the information stored or updated in response to output of an advertisement in the user terminal 53 includes a flag indicating whether or not the predetermined request from the user is executable. Moreover, the information updated in response to transmission of an advertisement from the first server apparatus 51 to the user terminal 53 or the information stored or updated in response to output of an advertisement includes a flag indicating whether or not the predetermined information processing is executable in the first server apparatus 51, the second server apparatus 52, or the user terminal 53. The user management table of the first server apparatus 51 stores the flag in association with the user identification information for user identification. For example, "true" is stored in a case where a condition enabling execution of the predetermined request is satisfied, and "false" is stored in a case where the condition enabling execution of the predetermined request is not satisfied. For example, "true" is stored in a case where a condition enabling execution of the predetermined information processing is satisfied, and "false" is stored in a case where the condition enabling execution of the predetermined information processing is not satisfied.

The condition for enabling execution of the predetermined request or the condition for enabling the predetermined information processing can be appropriately set. For example, the condition for enabling execution of the predetermined request or the condition for enabling the predetermined information processing can be set such that an advertisement is transmitted from the first server apparatus 51 to the user terminal 53 in the user terminal 53 of one user, that an advertisement is output in the user terminal 53 in the user terminal 53 of one user, that the number of times of transmitting an advertisement from the first server apparatus 51 to the user terminal 53 is a predetermined number of times or more in the user terminal 53 of one user, that the number of times of outputting an advertisement in the user terminal 53 is a predetermined number of times or more in the user terminal 53 of one user, that the time of a video advertisement transmitted from the first server apparatus 51 to the user terminal 53 is a predetermined time or more in the user terminal 53 of one user, or that the time of a video advertisement output in the user terminal 53 is a predetermined time or more in the user terminal 53 of one user. Here, for example, when one video advertisement is output from the beginning to the end or is output for a predetermined time from the beginning, the number of times of output can be counted as one. In addition, the time of the video advertisement may be the time of one video advertisement or the total time of a plurality of video advertisements. For example, by satisfying any one of these conditions, the point is added to the user, or the flag is updated from "false" to "true".

As the condition for enabling execution of the predetermined request or the condition for enabling the predetermined information processing (for example, a condition under which the point is added to the user, or a condition under which the flag is updated from "false" to "true"), another condition can be added in addition to the condition related to the transmission of the advertisement from the first server apparatus 51 or the condition related to the output of the advertisement in the user terminal 53.

For example, it is possible to set a condition that a predetermined operation is performed in the user terminal 53 on a second advertisement related to the advertisement transmitted from the first server apparatus 51, that is, the advertisement output in the user terminal 53. The second advertisement may be, for example, an advertisement displayed in a second application or an advertisement displayed on any website. In addition, the second advertisement may be any of an advertisement using a text, an advertisement using a still image, a video advertisement, and an audio advertisement, and may be, for example, a banner advertisement. The relevance of the second advertisement to the advertisement output in the user terminal 53 is not particularly limited, but it is preferable that the second advertisement is, for example, an advertisement related to the same product or service as that in the advertisement output in the user terminal 53 or an advertisement by the same advertiser as that of the advertisement output in the user terminal 53.

Selection of a link attached to the banner advertisement that is the second advertisement by the user terminal 53 or pressing of a button for requesting point reception in a page on which the second advertisement is displayed can be used as the condition for enabling execution of the predetermined request or the condition for enabling the predetermined information processing. By adding such a condition, the point or the like can be given only to a user who has a certain interest in the content of the second advertisement instead of giving the point or the like only by outputting a PinP advertisement in the user terminal 53.

In addition to the method of managing the point or the flag in the user management table, it is possible to enable execution of the predetermined request simply in response to the transmission of the advertisement from the first server apparatus 51 or the output of the advertisement in the user terminal 53. It is also possible to enable the predetermined information processing in the first server apparatus 51, the second server apparatus 52, or the user terminal 53 simply in response to the transmission of the advertisement from the first server apparatus 51 or the output of the advertisement in the user terminal 53.

In a case where the predetermined request is executed or in a case where the predetermined information processing is executed, the user management table is updated, and some points are consumed and subtracted, or the above flag is updated from "true" to "false".

The user management table of the first server apparatus 51 stores the presence or absence of the point or the flag in association with the user identification information, and similarly, the user management table of the second server apparatus 52 stores the presence or absence of the point or the flag in association with the user identification information. For example, some points stored in the user management table of the first server apparatus 51 can be converted into points in the user management table of the second server apparatus 52 by operating the user terminal 53. In addition, the user management table of the second server apparatus 52 can be synchronized with the user management table of the first server apparatus 51.

When the user terminal 53 receives the advertisement from the first server apparatus 51, the advertisement is displayed on the display screen of the user terminal 53. The advertisement can be displayed on the entire display screen, or can be displayed in a picture-in-picture (PinP) format on a part of the display screen as illustrated in Figs. 9 to 11. For example, it is also possible to display the advertisement in a PinP format on a part of a screen by the first application for displaying the advertisement. In addition, in the user terminal 53, in a case where a screen by another application different from the first application is displayed without displaying the first application on the display screen, it is also possible to display the advertisement in a PinP format on a part of the screen by the other application as illustrated in Fig. 10. Furthermore, in the user terminal 53, in a case where the home screen is displayed without displaying the first application on the display screen, it is also possible to display the advertisement in a PinP format on a part of the home screen as illustrated in Fig. 9. In this manner, the user can view the advertisement even in a case where the screen by the other application different from the first application is displayed or in a case where the home screen is displayed. Furthermore, even when the user views the advertisement in the case where the screen by the other application different from the first application is displayed or in the case where the home screen is displayed, it is possible to satisfy a condition for receiving provision of a product or a service by the second application using the point or the like.

The format of data constituting the advertisement is not particularly limited, and may be, for example, any of a text advertisement, an audio advertisement, an advertisement using a still image (for example, a banner), and a video advertisement.

The second server apparatus 52 plays a role different from that of the first server apparatus 51. The role and function of the second server apparatus 52 are not particularly limited. The user can operate the user terminal 53 to request the second server apparatus 52 to execute a predetermined request or to execute predetermined information processing.

For example, the second server apparatus 52 has a function of establishing communication connection with the user terminal 53 and providing a product or a service to the user terminal 53. An application (hereinafter, referred to as a second application) for accessing the second server apparatus 52 and receiving provision of a product or a service is installed in the user terminal 53 operated by the user. The user starts the second application by operating the input unit 53d, and accesses the second server apparatus 52. Note that the second application may be a browser.

The product or service that can be provided using the second application is not particularly limited. Examples of the product include books, home appliances, electronic devices, stationery, food, clothes, and toys, which can be purchased on a normal EC site, and also include electronic content (downloading of electronic content such as comics and video). Examples of the service include a service that can be received in an offline place such as a store, and also include a service that can be received online. Examples of the service that can be received online include a service that provides a game, a content distribution service of comics, video, music, audio, books, and games, and a service that provides a communication tool such as an SNS. In addition, the service that can be received online also includes software as a service (SaaS).

For example, the user can transmit a product purchase request (request for execution of the predetermined information processing) to the second server apparatus 52 by operating the input unit 53d of the user terminal 53. The second server apparatus 52 refers to the user management table of the first server apparatus 51, and determines whether or not the point given to the corresponding user is equal to or more than a point corresponding to the product. In a case where the point given to the corresponding user is equal to or more than the point corresponding to the product according to the determination result, the product can be purchased by the user by consuming the point.

For example, the user can transmit a distribution request (request for execution of the predetermined information processing) of content such as comics, video, music, audio, books, and games to the second server apparatus 52 by operating the input unit 53d of the user terminal 53. The second server apparatus 52 refers to the user management table of the first server apparatus 51, and determines whether or not a flag indicating that distribution of the content for which the distribution request has been made is enabled is stored for the corresponding user. In a case where the flag indicating that distribution of the content for which the distribution request has been made is enabled is stored according to the determination result, the flag is updated to a flag indicating that distribution of the content is disabled, and then the content is distributed from the second server apparatus 52 to the user terminal 53.

The predetermined information processing described above is not particularly limited. In a case where a product is purchased in the second application, the predetermined information processing can be purchase processing of the product by the second server apparatus 52 or purchase processing after price reduction of the product, or purchase request transmission processing of the product by the user terminal 53 or transmission processing after price reduction of the product. Therefore, in a case where the point given to the corresponding user is less than a predetermined value or in a case where a flag indicating that purchase of the product is enabled is not stored in the user management table, the purchase processing of the product by the second server apparatus 52 or the purchase request transmission processing of the product by the user terminal 53 cannot be executed.

In addition, in a case where a content distribution service is performed in the second application, the predetermined information processing can be content distribution processing by the second server apparatus 52 or content distribution processing after reduction of a distribution fee, or content output processing by the user terminal 53 or content output processing after reduction of a distribution fee. Therefore, in a case where the point given to the corresponding user is less than a predetermined value or in a case where a flag indicating that content distribution is enabled is not stored in the user management table, the content distribution processing by the second server apparatus 52 or the content output processing by the user terminal 53 cannot be executed.

The user can receive a benefit by using the second application in response to the transmission of the advertisement to the user terminal 53 or the output of the advertisement in the user terminal 53. The user can make a predetermined request in the second application by operating the user terminal 53. The predetermined request can be appropriately set depending on the intended use/purpose of the second application. The predetermined request also includes the request for execution of the predetermined information processing.

The predetermined information processing can be appropriately set depending on the intended use/purpose of the second application. In a case where the predetermined request coincides with the request for execution of the predetermined information processing, examples of the predetermined information processing include: exchange processing with a point available for purchase or price reduction of a product (including a product of an advertiser) or a service (for example, a point given in response to transmission of an advertisement from the first server apparatus to the user terminal or output of an advertisement from the user terminal are converted into another point available for purchase of a product or a service); grating processing of coupon data enabling free exchange with a product or price reduction to the user (user terminal 53); granting processing of ticket data enabling provision of a free or discounted service to the user (user terminal 53); donation processing to various groups via a network; processing enabling free use or discounted use of a content distribution service; content distribution processing in a content distribution service; purchase processing of securities such as stocks or investment trusts; or payment processing of utility expenses. In a case where the predetermined request coincides with the request for execution of the predetermined information processing, that is, in a case where the user operates the user terminal 53 to request execution of the predetermined information processing in the second application, the information processing as exemplified here is executed in step S27.

The predetermined request may be a request other than the information processing. For example, the predetermined request can be a request for receiving a benefit in the real world such as mailing of a product or various goods or mailing of a privilege (a coupon or a ticket of a product), instead of the request for execution of the information processing. In this case, the predetermined information processing in step S27 can be notification from the second server apparatus 52 to the user terminal 53 indicating that a product or a privilege is to be granted, or registration in the user management table of the first server apparatus 51 or the second server apparatus 52 such that a product or a privilege is to be granted. That is, the predetermined information processing in step S27 can be notification to the user terminal 53 indicating that the user can receive a benefit in the real world, or registration in the user management table such that the user can receive a benefit in the real world.

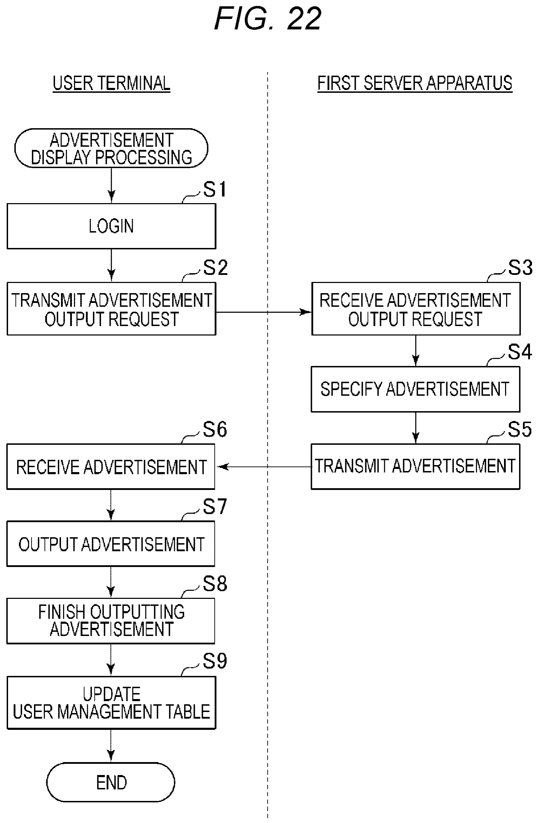

Fig. 22 is a diagram illustrating a flowchart of advertisement display processing of the third embodiment. Note that steps S11 to S16 of app switching processing described later can be executed in parallel during execution of steps S4 to S9.

A user starts the first application by operating the input unit 53d of the user terminal 53, and accesses and logs in to the first server apparatus 51 (step S1). At the time of login, the user inputs user identification information enabling user identification and a password.

Next, the user transmits an advertisement output request to the first server apparatus 51 by operating the input unit 53d (step S2). The first server apparatus 51 receives the advertisement output request from the user terminal 53 (step S3).

When receiving the advertisement output request, the first server apparatus 51 specifies an advertisement to be transmitted to the user terminal 53 (step S4). Advertisement data transmitted to the user terminal 53 may be any of text data, image data using a still image, video data, and audio data.

In step S4, it is possible to specify an advertisement so as to output a different advertisement according to the active application in the user terminal 53 at the time of executing step S4. Since the app switching processing can be executed in parallel during the execution of the advertisement display processing as described above, the active application of the user terminal 53 may be an application different from the first application. At this time, information regarding the active application of the user terminal 53 is transmitted to the first server apparatus 51, and the information regarding the active application is used for specifying an advertisement. For example, in a case where the active application is a game, an advertisement related to the game is specified. In this manner, it is possible to specify an advertisement according to the genre or use of the active application.

In addition, in step S4, it is possible to specify an advertisement so as to output a different advertisement according to the display content in the window of the active application in the user terminal 53 at the time of executing step S4. At this time, information regarding the display content in the window of the active application of the user terminal 53 is transmitted to the first server apparatus 51, and the information regarding the active application is used for specifying an advertisement.

Moreover, in a case where an application that enables imaging of the real world by a camera installed in the user terminal 53 is active at the time of executing step S4, it is possible to specify an advertisement so as to output a different advertisement according to an image captured by the camera. At the time of executing step S4, image information captured by the camera of the user terminal 53 is transmitted to the first server apparatus 51, and the captured image information is used for specifying an advertisement. The display screen of the user terminal 53 displays a state of the real world captured by the camera (that is, a state of the real world corresponding to the image information). For example, when the real world captured by the camera is a sea scene, an advertisement related to the sea (for example, an advertisement related to fishing tackle or marine sports) is displayed. The scene can be specified using a prediction model obtained by machine learning using the image as input data and the content of the image as output data.

Furthermore, in a case where the home screen is displayed at the time of executing step S4, it is possible to specify an advertisement so as to output a different advertisement according to the display content of the home screen. The display content of the home screen is, for example, icons corresponding to various applications displayed on the home screen or a wallpaper displayed on the home screen. During the execution of step S4, the display content of the home screen is transmitted to the first server apparatus 51, and the information regarding the active application is used for specifying an advertisement.

When the advertisement is specified in step S4, the first server apparatus 51 transmits the specified advertisement to the user terminal 53 (step S5). The user terminal 53 receives the advertisement from the first server apparatus 51 (step S6). In a case where the advertisement is video, the advertisement is received in a streaming format. The received advertisement is output in the user terminal 53 (step S7).

In step S7, the advertisement can be displayed on the entire display screen, or can be displayed in a picture-in-picture (PinP) format on a part of the display screen as illustrated in Figs. 9 to 11. For example, it is also possible to display the advertisement in a PinP format on a part of a screen by the first application for displaying the advertisement.

In a case where the advertisement is a text advertisement or an advertisement using a still image, the advertisement ends after the lapse of a predetermined time from the display of the advertisement. In a case where the advertisement is a video advertisement or an audio advertisement, the output of the advertisement ends after playing of video data or audio data is finished (step S8).

The user management table stored in the storage 51c of the first server apparatus 51 is updated (step S9). The user management table stores the user identification information (user ID) enabling the identification of the user who operates the user terminal 53 and the point owned by the user in association with each other. In step S9, a point is given in response to the transmission of the advertisement from the first server apparatus 51 to the user terminal 53 or in response to the output of the advertisement in the user terminal 53. A point of a different value may be given for each advertisement. The point value to be given may be stored in advance for each advertisement, or the point value may be specified according to the play time of an advertisement by video or audio. In addition, in step S9, a point may be given every time one advertisement is transmitted from the first server apparatus 51 or one advertisement is output in the user terminal 53, or a point may be given in accordance with the total time of transmitted advertisements or the total time of output advertisements.

When step S9 ends, the process can return to step S4 and the processes from steps S4 to S9 can be repeatedly performed. When the advertisement is repeatedly played, the same advertisement as the advertisement transmitted to the user terminal 53 in the past may be specified, or an advertisement different from the advertisement transmitted to the user terminal 53 in the past may be specified in step S4. In addition, the user may end continuous playing of the advertisement without returning to step S4 by operating the input unit 53d of the user terminal 53.

In step S9, the point is given in response to the transmission of the advertisement from the first server apparatus 51 to the user terminal 53 or in response to the output of the advertisement in the user terminal 53. However, instead of this, for example, the flag as to whether or not to enable the predetermined information processing in the first server apparatus 51, the second server apparatus 52, or the user terminal 53 can be updated. Every time the transmission of the advertisement from the first server apparatus 51 or the output of the advertisement in the user terminal 53 ends, every time the transmission of the advertisement or the output of the advertisement ends a predetermined number of times, or every time the total time of the transmission of the advertisement or the output of the advertisement exceeds a predetermined time, the flag indicating that the predetermined information processing is enabled is set.

By steps S1 to S9, the advertisement display processing ends.

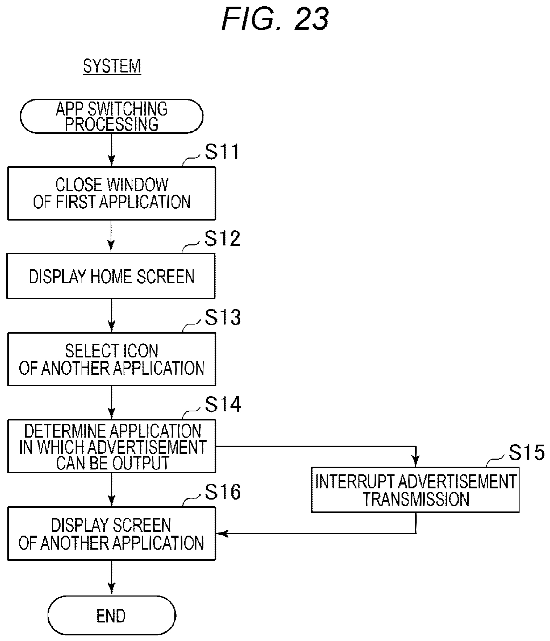

Fig. 23 is a diagram illustrating a flowchart of the app switching processing of the third embodiment. A case where the app switching processing is executed during the execution of steps S4 to S9, that is, during the output of the advertisement in the user terminal 53 (for example, during playing of a video advertisement) will be described.

In the user terminal 53, the first application is active, and the advertisement by the first application is displayed in a PinP format on a part of the display screen of the user terminal 53. Here, the user operates the input unit 53d of the user terminal 53 to close the window of the first application (step S11).

When the window of the first application is closed, the home screen is displayed on the display screen of the user terminal 53 (step S12). Even when the window of the first application is closed, the operation of the first application is not terminated during the output of the advertisement in the user terminal 53 (for example, during playing of a video advertisement). In step S12, the advertisement is displayed in a picture-in-picture (PinP) format on a part of the display screen as illustrated in Fig. 9.

For the advertisement displayed on the home screen in step S12, the advertisement displayed before the window of the first application is closed in step S11 may be continuously displayed, or an advertisement to be newly displayed can be specified, and the advertisement output before the window of the first application is closed can be switched to the newly specified advertisement to be output.

(An) icon(s) of one or a plurality of applications is/are displayed on the home screen. The icon(s) displayed here may include an icon corresponding to the second application. The user operates the input unit 53d of the user terminal 53 to select an icon corresponding to an application other than the first application (step S13). The user can also select the icon corresponding to the second application.

When the icon corresponding to the application different from the first application is selected, the user terminal 53 transmits application identification information enabling identification of the selected application to the first server apparatus 51, and it is determined whether or not the application is an application on which an advertisement can be output (step S14).

In a case where it is determined that the application is an application on which an advertisement cannot be output according to the determination result in step S14, the transmission of the video advertisement or the audio advertisement from the first server apparatus 51 to the user terminal 53 in a streaming format is interrupted (step S15).

In a case where the transmission of the advertisement in a streaming format is interrupted, suppose that a window of the application on which an advertisement cannot be output is closed, and then an application on which an advertisement can be output is operated. In this case, the transmission of the video advertisement or the audio advertisement can be started from the point of time when the transmission of the video advertisement or the audio advertisement from the first server apparatus 51 is interrupted.

The determination in step S14 may be made on the basis of, for example, control information for determining an application on which an advertisement is not output, or may be made on the basis of control information for determining an application on which an advertisement is output.

In a case where it is determined that the application is the application on which an advertisement cannot be output according to the determination result in step S14, a screen corresponding to the selected application is displayed on the display screen of the user terminal 53 without displaying the video advertisement (step S16).

In a case where it is determined that the application is the application on which an advertisement can be output according to the determination result in step S14, the transmission of the video advertisement from the first server apparatus 51 to the user terminal 53 in a streaming format is not interrupted, and the advertisement is displayed on a part of the display screen corresponding to the selected application together with the screen corresponding to the application on the display screen of the user terminal 53 (step S16).

In step S16, even in a case where another application different from the first application is displayed, the operation of the first application is not terminated during the output of the advertisement in the user terminal 53 (for example, during playing of a video advertisement). In step S16, the advertisement is displayed in a picture-in-picture (PinP) format on a part of the display screen as illustrated in Fig. 10.

For the advertisement displayed on the window of the other application different from the first application in step S16, the advertisement displayed before the icon of the other application is selected in step S13 may be continuously displayed, or an advertisement to be newly displayed can be specified, and the advertisement displayed on the home screen can be switched to the newly specified advertisement to be output.

By steps S11 to S16, the app switching processing from the first application to another application (including the second application) different from the first application ends.

When the user operates the input unit 53d of the user terminal 53 to close the window of the other application in a state where the other application is displayed on the display screen of the user terminal 53, the home screen is displayed on the display screen of the user terminal 53. Also in this case, the operation of the first application is not terminated during the output of the advertisement in the user terminal 53 (for example, during playing of a video advertisement), and the advertisement is displayed in a picture-in-picture (PinP) format.

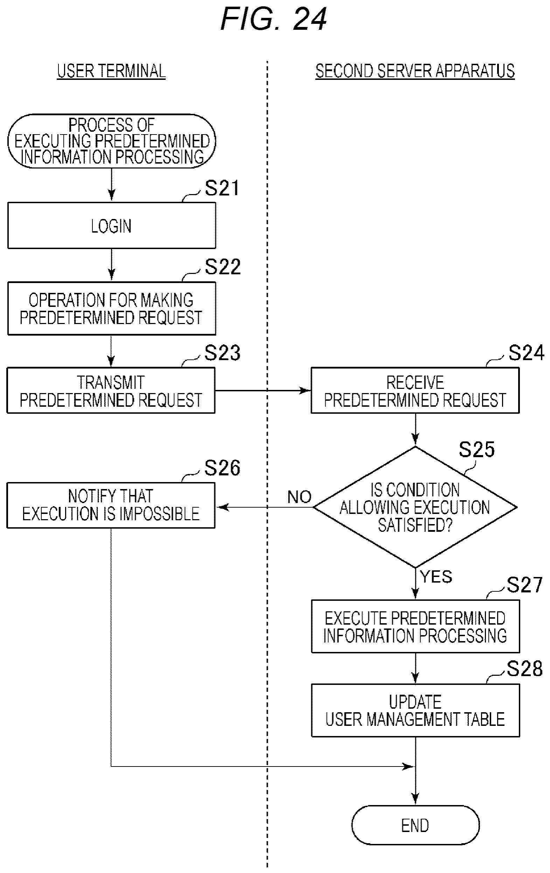

Fig. 24 is a diagram illustrating a flowchart of a process of executing the predetermined information processing of the third embodiment. The user starts the second application by operating the input unit 53d of the user terminal 53, and accesses and logs in to the second server apparatus 52 (step S21). At the time of login, the user inputs user identification information enabling user identification and a password.

The user performs a predetermined operation on the second application using the user terminal 53 (step S22). The predetermined operation is not particularly limited as long as the predetermined operation is to make a predetermined request to the second server apparatus 52 or a business operator who provides a product or a service using the second server apparatus 52. Examples of the predetermined request include a request for purchase of a product or a service, a request for price reduction of a product or a service, a request for free provision of a product or a service, a request for renting of a product, a request for distribution of content, and a request for granting of a point (this point is different from the point given to the user in the first server apparatus 51, and can be used in other platforms).

By performing the predetermined operation, the predetermined request is transmitted from the user terminal 53 to the second server apparatus 52 (step S23). When the second server apparatus 52 receives the predetermined request (step S24), it is determined whether or not a condition under which the predetermined request is executable is satisfied (step S25).

In step S24, for example, on the basis of the user management table stored in the second server apparatus 52, it is possible to determine the number of points corresponding to the user identification information or the presence or absence of the flag (flag indicating that the condition under which the predetermined request from the user is executable is satisfied) (whether or not the flag is set).

In addition, in step S24, the second server apparatus 52 can refer to the first server apparatus 51 as to whether or not the predetermined request is executable on the basis of the user identification information. The first server apparatus 51 refers to the user management table on the basis of the user identification information received from the second server apparatus 52 to specify the number of points corresponding to the user identification information or the presence or absence of the flag (flag indicating that the condition under which the predetermined request from the user is executable is satisfied) (whether or not the flag is set). The specified number of points of the user or the specified presence or absence of the flag is transmitted to the second server apparatus 52. The second server apparatus 52 determines whether or not the predetermined request is executable on the basis of the received number of points of the user or the received presence or absence of the flag.

In addition, the first server apparatus 51 may periodically transmit the information of the user management table to the second server apparatus 52 instead of the second server apparatus 52 referring to the first server apparatus 51 as to the number of points of the user or the presence or absence of the flag.

In a case where it is determined in step S25 that the condition under which the predetermined request is executable is not satisfied (No in step S25), it is notified that the condition under which the predetermined request is executable is not satisfied or that the predetermined request cannot be executed (step S26). On the other hand, in a case where it is determined in step S25 that the condition under which the predetermined request is executable is satisfied (YES in step S25), the predetermined information processing is executed (step S27).

When the predetermined information processing is executed, the user management table is updated (step S28). In the user management table, the point corresponding to the predetermined request is subtracted, or the flag is updated from "true" to "false".

By steps S21 to S28, the process of executing the predetermined information processing ends.

Here, the predetermined information processing is executed by operating the user terminal 53 in step S22 to transmit the predetermined request to the second server apparatus 52 on the second application. However, the predetermined information processing may be automatically executed in a case where the predetermined request becomes executable in response to the transmission of the advertisement from the first server apparatus 51 to the user terminal 53 or in response to the output of the advertisement in the user terminal 53.

### Reference Signs List

- A: Information system
- 1, 2: Content output apparatus
- 3: Terminal apparatus
- 11, 21: Storage unit
- 12: Acceptance unit
- 13, 23: Processing unit
- 14: Output unit
- 22: Reception unit
- 24: Transmission unit
- 31: Terminal storage unit
- 32: Terminal acceptance unit
- 33: Terminal processing unit
- 34: Terminal transmission unit
- 35: Terminal reception unit
- 36: Terminal output unit
- 111: Content storage unit
- 112: Advertisement management unit
- 113, 213: Status management unit
- 114: Control information management unit
- 121: Instruction acceptance unit
- 131: Determination unit
- 132: Content acquisition unit
- 133: Advertisement acquisition unit
- 134: Status changing unit
- 141: Content output unit
- 142: Advertisement output unit
- 50: System
- 51: First server apparatus
- 52: Second server apparatus
- 53: User terminal
- 54: Communication network

## Claims

1. A system comprising: a first server apparatus; and a user terminal capable of establishing communication connection with the first server apparatus, the system comprising
an advertisement outputter configured to output an advertisement on a part of a window of one active application displayed on the user terminal or on a part of a home screen displayed on the user terminal.

2. The system according to claim 1, wherein predetermined information processing is executable in the first server apparatus, the user terminal, or a second server apparatus different from the first server apparatus in response to transmission of the advertisement from the first server apparatus to the user terminal or in response to the output of the advertisement by the advertisement outputter.

3. The system according to claim 2, wherein predetermined information processing is executable in further response to a predetermined operation related to a second advertisement related to the advertisement performed in the user terminal.

4. The system according to any one of claims 1 to 3, comprising an information storage
configured to store or update predetermined information in response to transmission of the advertisement from the first server apparatus to the user terminal or in response to the output of the advertisement by the advertisement outputter.

5. The system according to any one of claims 1 to 4, wherein the information storage stores or updates predetermined information in further response to a predetermined operation related to a second advertisement related to the advertisement performed in the user terminal.

6. The system according to claim 4 or 5, wherein predetermined information processing is enabled in the first server apparatus, the user terminal, or the second server apparatus in a case where the predetermined information satisfies a predetermined condition.

7. The system according to any one of claims 4 to 6, wherein the predetermined information is a point given to a user who operates the user terminal.

8. The system according to any one of claims 4 to 6, wherein the predetermined information is a flag indicating whether or not to enable predetermined information processing in the first server apparatus, the user terminal, or the second server apparatus.

9. The system according to any one of claims 2 to 8, wherein the predetermined information processing is a process of transmitting content stored in the first server apparatus or the second server apparatus from the first server apparatus or the second server apparatus to the user terminal, or a process of outputting the content in the user terminal.

10. The system according to any one of claims 2 to 8, wherein the predetermined information processing is, in the first server apparatus or the second server apparatus, a process of granting privilege data to a user who operates the user terminal, a process of registering granting of a privilege to the user, or a process of notifying the user terminal of granting a privilege.

11. The system according to any one of claims 1 to 10, wherein the advertisement outputter outputs a different advertisement according to the application, outputs a different advertisement according to display content on the window of the application, or outputs a different advertisement according to display content of the home screen.

12. The system according to any one of claims 1 to 11, wherein on a basis of control information for determining an application on which an advertisement is not output, the advertisement outputter does not output the advertisement on a part of a window of the application on which an advertisement is not output.

13. The system according to any one of claims 1 to 12, wherein on a basis of control information for determining an application on which an advertisement is output, the advertisement outputter outputs the advertisement on a part of a window of the application on which an advertisement is output.

14. A program causing a user terminal capable of establishing communication connection with a first server apparatus to function as
an advertisement outputter configured to output an advertisement on a part of a window of one active application displayed on the user terminal or on a part of a home screen displayed on the user terminal.

15. A method executed in a system including a first server apparatus, and a user terminal capable of establishing communication connection with the first server apparatus, the method comprising
an advertisement output step of outputting an advertisement on a part of a window of one active application displayed on the user terminal or on a part of a home screen displayed on the user terminal.

16. A system comprising: a first server apparatus; a second server apparatus; and a user terminal capable of establishing communication connection with the first server apparatus and the second server apparatus, the system comprising:
an advertisement transmitter configured to transmit an advertisement from the first server apparatus to the user terminal;
an advertisement outputter configured to output the advertisement transmitted from the first server apparatus on a part of a window of one active application displayed on the user terminal or on a part of a home screen displayed on the user terminal; and
a first process executer configured to execute predetermined information processing in the second server apparatus in response to the transmission of the advertisement by the advertisement transmitter or in response to the output of the advertisement by the advertisement outputter;
a second process executer configured to execute predetermined information processing in the second server apparatus in response to the transmission of the advertisement by the advertisement transmitter and a predetermined operation performed in the user terminal or in response to the output of the advertisement by the advertisement outputter and a predetermined operation performed in the user terminal; and/or
a third process executer configured to execute predetermined information processing in the second server apparatus by consuming a point given in response to the transmission of the advertisement from the first server apparatus to the user terminal or by consuming a point given in response to the output of the advertisement received from the first server apparatus in the user terminal.

17. A system comprising: a first server apparatus; and a user terminal capable of establishing communication connection with the first server apparatus, the system comprising:
an advertisement transmitter configured to transmit an advertisement from the first server apparatus to the user terminal;
an advertisement outputter configured to output the advertisement transmitted from the first server apparatus on a part of a window of one active application displayed on the user terminal or on a part of a home screen displayed on the user terminal; and
a first process executer configured to execute predetermined information processing in the first server apparatus in response to the transmission of the advertisement by the advertisement transmitter or in response to the output of the advertisement by the advertisement outputter;
a second process executer configured to execute predetermined information processing in the first server apparatus in response to the transmission of the advertisement by the advertisement transmitter and a predetermined operation performed in the user terminal or in response to the output of the advertisement by the advertisement outputter and a predetermined operation performed in the user terminal; and/or
a third process executer configured to execute predetermined information processing in the first server apparatus by consuming a point given in response to the transmission of the advertisement from the first server apparatus to the user terminal or by consuming a point given in response to the output of the advertisement received from the first server apparatus in the user terminal.

18. The system according to claim 16 or 17, wherein the predetermined information processing is a process of transmitting content stored in the first server apparatus or the second server apparatus from the first server apparatus or the second server apparatus to the user terminal, or a process of outputting the content in the user terminal.

19. The system according to claim 16 or 17, wherein the predetermined information processing is, in the first server apparatus or the second server apparatus, a process of granting privilege data to a user who operates the user terminal, a process of registering granting of a privilege to the user, or a process of notifying the user terminal of granting a privilege.

20. The system according to any one of claims 16 to 19, wherein the point is given to a user in response to the transmission of the advertisement from the first server apparatus to the user terminal and a predetermined operation related to a second advertisement related to the advertisement performed in the user terminal, or
the point is given to the user in response to the output of the advertisement received from the first server apparatus in the user terminal and a predetermined operation related to a second advertisement related to the advertisement performed in the user terminal.

21. A method executed in a system including a first server apparatus, a second server apparatus, and a user terminal capable of establishing communication connection with the first server apparatus and the second server apparatus, the method comprising:
an advertisement transmission step of transmitting an advertisement from the first server apparatus to the user terminal;
an advertisement output step of outputting the advertisement transmitted from the first server apparatus on a part of a window of one active application displayed on the user terminal or on a part of a home screen displayed on the user terminal; and
a first process execution step of executing predetermined information processing in the second server apparatus in response to the transmission of the advertisement in the advertisement transmission step or in response to the output of the advertisement in the advertisement output step;
a second process execution step of executing predetermined information processing in the second server apparatus in response to the transmission of the advertisement in the advertisement transmission step and a predetermined operation performed in the user terminal or in response to the output of the advertisement in the advertisement output step and a predetermined operation performed in the user terminal; and/or
a third process execution step of executing predetermined information processing in the second server apparatus by consuming a point given in response to the transmission of the advertisement from the first server apparatus to the user terminal or by consuming a point given in response to the output of the advertisement received from the first server apparatus in the user terminal.

22. A method executed in a system including a first server apparatus and a user terminal capable of establishing communication connection with the first server apparatus, the method comprising:
an advertisement transmission step of transmitting an advertisement from the first server apparatus to the user terminal;
an advertisement output step of outputting the advertisement transmitted from the first server apparatus on a part of a window of one active application displayed on the user terminal or on a part of a home screen displayed on the user terminal; and
a first process execution step of executing predetermined information processing in the first server apparatus in response to the transmission of the advertisement in the advertisement transmission step or in response to the output of the advertisement in the advertisement output step;
a second process execution step of executing predetermined information processing in the first server apparatus in response to the transmission of the advertisement in the advertisement transmission step and a predetermined operation performed in the user terminal or in response to the output of the advertisement in the advertisement output step and a predetermined operation performed in the user terminal; and/or
a third process execution step of executing predetermined information processing in the first server apparatus by consuming a point given in response to the transmission of the advertisement from the first server apparatus to the user terminal or by consuming a point given in response to the output of the advertisement received from the first server apparatus in the user terminal.
